# EUROPEAN PATENT APPLICATION

(11) **EP 4 848 710 A1**
(43) Date of publication of application: **02.12.2026**
(21) Application number: 25827218.6
(22) Date of filing: 25.03.2025
(51) Int. Cl.: H04N 13/268, H04N 13/271, H04N 13/128, G06T 7/194, G06T 5/77, G06T 7/521, G06T 15/00

(54) **ELECTRONIC DEVICE AND METHOD FOR APPLYING STEREOSCOPIC VISUAL EFFECT TO IMAGE, AND NON-TRANSITORY COMPUTER-READABLE STORAGE MEDIUM**

(30) Priority: 25.06.2024 KR 20240082458; 09.07.2024 KR 20240090781
(71) Applicant: Samsung Electronics Co., Ltd., Suwon-si, Gyeonggi-do 16677 (KR)
(72) Inventor: KIM, Kyuwon, Suwon-si, Gyeonggi-do 16677 (KR); KIM, Jongkwang, Suwon-si, Gyeonggi-do 16677 (KR); KIM, Jongkyu, Suwon-si, Gyeonggi-do 16677 (KR); KIM, Hyunsoo, Suwon-si, Gyeonggi-do 16677 (KR); YANG, Chulju, Suwon-si, Gyeonggi-do 16677 (KR); SAA-GARRIGA, Albert, Staines Middlesex TW184QE (GB); LABOYRIE, Frederik, Staines Middlesex TW184QE (GB); YUCEL, Mehmet, Staines Middlesex TW184QE (GB); PRICE, Wayne, Staines Middlesex TW184QE (GB)
(74) Representative: HGF
(86) International application number: PCT/KR2025/003830
(87) International publication number: WO 2026/005197

(57) **Abstract**

An electronic device according to one embodiment can: display an image on a display; receive, on the basis of displaying the image, an input for applying a stereoscopic visual effect to the image; identify, on the basis of the input, segmentation information representing an object of the image; identify the object from the segmentation information; on the basis of the object including the edge of the image, generate, on the display, a first video representing a background area in the image, which is moved a first distance beyond the object, and apply the stereoscopic visual effect; and, on the basis of the object spaced apart from the edge of the image, generate, on the display, a second video representing a background area in the image, which is moved a second distance, and apply the stereoscopic visual effect, wherein the second distance is less than the first distance.

## Description

### [TECHNICAL FIELD]

The present disclosure relates to an electronic device, a method, and a non-transitory computer readable storage medium for applying a three-dimensional visual effect to an image.

### [BACKGROUND ART]

A shape and/or a size of an electronic device are diversifying. In order to enhance mobility, an electronic device with a reduced size and/or a reduced volume are being designed. The electronic device may include a camera to obtain an image and/or a video of an external environment. The electronic device may display the image and/or the video obtained (or captured) through the camera.

### [DISCLOSURE]

### [TECHNICAL SOLUTION]

According to an embodiment, an electronic device may comprise a display, memory comprising one or more storage media storing instructions, and at least one processor comprising processing circuitry. The instructions, when executed by the at least one processor individually or collectively, may cause the electronic device to display an image on the display. The instructions, when executed by the at least one processor individually or collectively, may cause the electronic device to, based on displaying the image, receive an input to apply a three-dimensional visual effect to the image. The instructions, when executed by the at least one processor individually or collectively, may cause the electronic device to, based on the input, identify segmentation information indicating an object of the image. The instructions, when executed by the at least one processor individually or collectively, may cause the electronic device to identify the object from the segmentation information. The instructions, when executed by the at least one processor individually or collectively, may cause the electronic device to, based on the object including an edge of the image, apply the three-dimensional visual effect by generating, on the display, a first video representing a background area within the image moved by a first distance beyond the object. The instructions, when executed by the at least one processor individually or collectively, may cause the electronic device to based on the object being spaced apart from the edge of the image, apply the three-dimensional visual effect by generating, on the display, a second video representing the background area within the image moved by a second distance beyond the object. The second distance may be shorter than the first distance.

According to an embodiment, a method of an electronic device including a display, may comprise displaying an image on the display. The method may comprise, based on displaying the image, receiving an input to apply a three-dimensional visual effect to the image. The method may comprise, based on the input, identifying segmentation information indicating an object of the image. The method may comprise identifying the object from the segmentation information. The method may comprise, based on the object including an edge of the image, applying the three-dimensional visual effect by generating, on the display, a first video representing a background area within the image moved by a first distance beyond the object. The method may comprise, based on the object being spaced apart from the edge of the image, applying the three-dimensional visual effect by generating, on the display, a second video representing the background area within the image moved by a second distance beyond the object. The second distance may be shorter than the first distance.

According to an embodiment, an electronic device may comprise a display, memory comprising one or more storage mediums and storing instructions, and at least one processor comprising processing circuitry. The instructions, when executed by the at least one processor individually or collectively, may cause the electronic device to display an image on the display. The instructions, when executed by the at least one processor individually or collectively, may cause the electronic device to, based on displaying the image on the display, receive an input to apply a three-dimensional visual effect to the image. The instructions, when executed by the at least one processor individually or collectively, may cause the electronic device to, based on the input, identify segmentation information indicating an object of the image. The instructions, when executed by the at least one processor individually or collectively, may cause the electronic device to, based on identifying the object including an edge of the image from the segmentation information, display, as a result of application of the three-dimensional visual effect, on the display, a first video representing a background area within the image moved by a first distance beyond the object. The instructions, when executed by the at least one processor individually or collectively, may cause the electronic device to, based on identifying the object spaced apart from the edge of the image from the segmentation information, display, as a result of application of the three-dimensional visual effect, on the display, a second video representing the background area within the image moved by a second distance that is shorter than the first distance beyond the object.

In an embodiment, a method of an electronic device including a display may be provided. The method may comprise displaying an image on the display. The method may comprise, based on displaying the image on the display, receiving an input to apply a three-dimensional visual effect to the image. The method may comprise, based on the input, identifying segmentation information indicating an object of the image. The method may comprise, based on identifying the object including an edge of the image from the segmentation information, generating, as a result of application of the three-dimensional visual effect, on the display, a first video representing a background area within the image moved by a first distance beyond the object. The method may comprise, based on identifying the object spaced apart from the edge of the image from the segmentation information, generating, as a result of application of the three-dimensional visual effect, on the display, a second video representing the background area within the image moved by a second distance that is shorter than the first distance beyond the object.

In an embodiment, a non-transitory computer readable storage medium storing instructions may be provided. The instructions, when executed by an electronic device including a display, may cause the electronic device to receive an input to apply a three-dimensional visual effect to an image including an object and a background area. The instructions, when executed by the electronic device, may cause the electronic device to, based on the input, determine a three-dimensional visual effect among a plurality of preset three-dimensional visual effects using a position of the object within the image, a depth of the object, and a depth of the background area. The instructions, when executed by the electronic device, may cause the electronic device to generate a video corresponding to the image by applying the determined three-dimensional visual effect to the image. The instructions, when executed by the electronic device, may cause the electronic device to display the generated video on the display.

In an embodiment, an electronic device may comprise a display, memory storing instructions, comprising one or more storage mediums, and at least one processor comprising processing circuitry. The instructions, when executed by the at least one processor individually or collectively, may cause the electronic device to receive an input to apply a three-dimensional visual effect to an image including an object and a background area. The instructions, when executed by the at least one processor individually or collectively, may cause the electronic device to, based on the input, determine a three-dimensional visual effect among a plurality of preset three-dimensional visual effects using a position of the object within the image, a depth of the object, and a depth of the background area. The instructions, when executed by the at least one processor individually or collectively, may cause the electronic device to generate a video corresponding to the image by applying the determined three-dimensional visual effect to the image. The instructions, when executed by the at least one processor individually or collectively, may cause the electronic device to display the generated video on the display.

Additional aspects will be set forth in part in the description which follows and, in part, will be apparent from the description, or may be learned by practice of the presented embodiments.

### [DESCRIPTION OF THE DRAWINGS]

The above and other aspects, features, and advantages of certain embodiments of the present disclosure will be more apparent from the following description taken in conjunction with the accompanying drawings, in which:
FIG. 1 illustrates an exemplary operation of an electronic device applying a three-dimensional visual effect to an image, according to an embodiment;
FIG. 2 is a block diagram of an electronic device according to an embodiment;
FIG. 3 illustrates a flowchart of an electronic device according to an embodiment;
FIG. 4 illustrates an operation of an electronic device that determines a three-dimensional visual effect to be applied to an image, using a position of an object and/or depth distribution of the image including the object, according to an embodiment;
FIG. 5 illustrates an operation of an electronic device comparing depths of an object and a background area, according to an embodiment;
FIG. 6 illustrates an operation of an electronic device applying a three-dimensional visual effect to an exemplary image, according to an embodiment;
FIG. 7 illustrates an operation of an electronic device applying a three-dimensional visual effect as an exemplary image, according to an embodiment;
FIG. 8 illustrates an operation of an electronic device applying a three-dimensional visual effect to an exemplary image, according to an embodiment;
FIG. 9 illustrates an operation of an electronic device applying a three-dimensional visual effect to an exemplary image, according to an embodiment;
FIG. 10 is a flowchart of operations of an electronic device according to an embodiment;
FIGS. 11A and 11B illustrate an exemplary operation of an electronic device determining a three-dimensional visual effect to be applied to an image, according to an embodiment;
FIG. 12 illustrates a user interface (UI) displayed by an electronic device to adjust a three-dimensional visual effect, according to an embodiment;
FIG. 13 illustrates an exemplary operation of an electronic device generating depth information from an image, according to an embodiment; and
FIG. 14 is a block diagram of an electronic device in a network environment according to various embodiments.

### [MODE FOR INVENTION]

Hereinafter, various embodiments will be described with reference to an accompanying drawing.

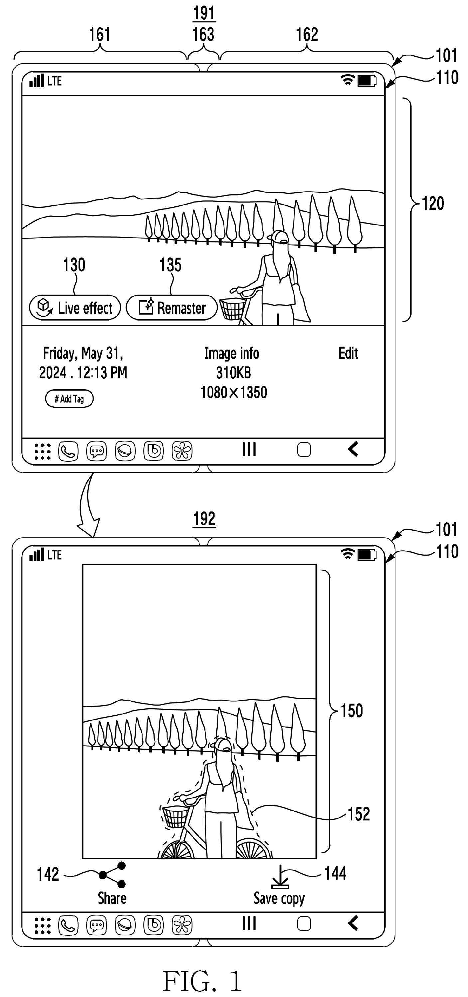

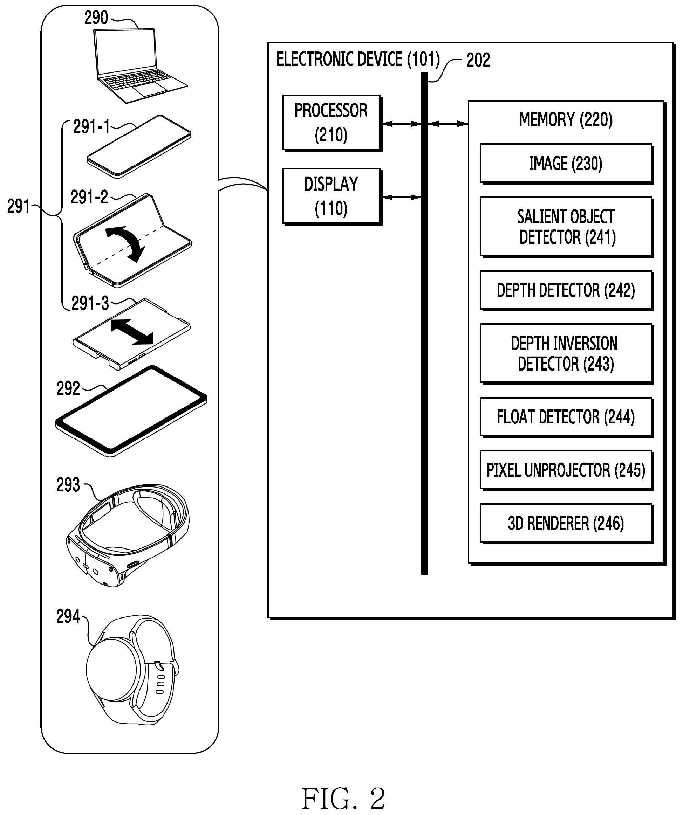

FIG. 1 illustrates an exemplary operation of an electronic device 101 applying a three-dimensional visual effect to an image 120, according to an embodiment. Referring to FIG. 1, the electronic device 101 including a foldable housing is exemplarily illustrated. The foldable housing (or a housing) may include a first housing part 161, a second housing part 162, and a hinge part 163 configured to rotatably couple the first housing part 161 to the second housing part 162. The electronic device 101 may include a display 110 disposed on the first housing part 161 and the second housing part 162. The display 110 may be extended from the first housing part 161, across the hinge part 163, to the second housing part 162. The display 110 may be a flexible display. However, embodiments are not limited thereto, and various form factors of the electronic device 101 are exemplarily described with reference to FIG. 2.

Referring to an exemplary state 191 of FIG. 1, the electronic device 101 may display the image 120 on the display 110. The image 120 may include a photograph captured by a camera and/or an image sensor. According to an embodiment, the image 120 may be stored in a file having a format based on a joint photographic experts group (JPEG). The format of the file is not limited to the JPEG, and may have a format of portable network graphic (PNG), a graphics interchange format (GIF), and/or a photoshop document (PSD). The file may have a preset extension (e.g., png, gif, psd, jpeg, and/or jpg) indicating inclusion of the image 120.

According to an embodiment, the electronic device 101 may apply a three-dimensional visual effect to the image 120. The three-dimensional visual effect may be defined to indicate dynamic movement based on the image 120. Applying the three-dimensional visual effect to the image 120 may include generating a video (or information indicating the video) in which a positional relationship between an object 152 of the image 120 and a background object is gradually changed. The object 152 is a main subject represented through the image 120, and an area of the image 120 in which the object 152 is displayed may be referred to as a region of interest (ROI), a subject area, and/or a foreground area. The object 152 may be referred to as a salient object and/or a foreground object. The three-dimensional visual effect may be referred to as a parallax effect.

For example, a user watching the video in which the positional relationship between the object 152 and the background object is gradually changed may recognize that the object 152 is positioned closer to the user than the background object. The recognition may cause a depth sense and/or a three-dimensional sense to the user.

For example, the three-dimensional visual effect applied to the image 120 may be applied to the image 120 to represent movement of a background area with respect to an object by changing movement directions and/or movement distances of each of the object 152 (or the foreground area of the image 120 where the object 152 is displayed) of the image 120 and the background object (or another area and/or a remaining area of the image 120 different from the foreground area) of the image 120. A result of applying the three-dimensional visual effect to the image 120 may be referred to as a three-dimensional photograph, a parallax image, and/or a video.

Referring to FIG. 1, in a state of displaying a screen including the image 120, the electronic device 101 may display a visual object 130 (e.g., a button including preset text such as "Live effect") to apply the three-dimensional visual effect to the image 120. The electronic device 101 may display a visual object 135 (e.g., a button including preset text such as a "Remaster") to adjust a color tone, light and shade, and/or contrast of the image 120. Through the visual object 130, the electronic device 101 may receive an input to apply the three-dimensional visual effect to the image 120. The input may include a tap gesture on the visual object 130, a mouse click with respect to the visual object 130, and/or a voice command such as a speech (e.g., "apply Live effect") including words related to the visual object 130. For example, in a state 191 in which the image 120 is displayed, the electronic device 101 may receive the input to apply the three-dimensional visual effect to the image 120 according to an actuation of the visual object 130.

In an embodiment, the electronic device 101 receiving the input to apply the three-dimensional visual effect to the image 120 may identify segmentation information indicating an object of the image 120. The segmentation information may include map information (e.g., a segmentation map) indicating whether each of pixels included in the image 120 is related to the object. Identifying the segmentation information may include obtaining the segmentation information by executing (e.g., executing by the electronic device 101 and/or a server connected with the electronic device 101) a model trained based on artificial intelligence. However, embodiments are not limited thereto, and identifying the segmentation information may include directly obtaining or extracting the segmentation information stored (e.g., stored in metadata of the image 120) together with the image 120.

For example, the electronic device 101 that identifies an object including an edge of the image 120 from the segmentation information corresponding to the image 120 may display, on the display, a first video 150 representing the background area within the image moved by a first distance beyond the object 152, as a result of application of the three-dimensional visual effect. Referring to FIG. 1, as the result of application of the three-dimensional visual effect, an exemplary state 192 of the electronic device 101 displaying the first video 150 is illustrated. In order to display the result of application of the three-dimensional visual effect to the image 120, the electronic device 101 may replace or change the image 120 displayed on the display 110 with the first video 150.

The electronic device 101 may distinguish a visual effect to be applied to the image 120 according to a position of the object 152 (or an area of the image 120 in which the object is displayed) within the image 120. For example, in case that a foreground object is spaced apart from an edge of another image within the other image different from the image 120 of FIG. 1, the electronic device may generate a second video representing a background area which is moved by a distance shorter than a distance that a background area is moved in the first video 150. For example, since the background area is moved by a second distance shorter than the first distance, the second video corresponding to the other image may indicate an object that moves relatively slower (or moves relatively a shorter distance) than the background area of the first video.

Referring to the exemplary state 192 of FIG. 1, the electronic device 101 may display visual objects 142 and 144 to share and/or store a result, together with the result (e.g., the first video 150) of application of a three-dimensional visual effect on the display 110. For example, the electronic device 101 may display the visual object 142 to share and/or transmit the first video 150 indicating the image 120 to which the three-dimensional visual effect is applied on the display 110. The visual object 142 may include, as an example without limitation, preset text such as "share". The electronic device 101 may display the visual object 144 to store the image 120 to which the three-dimensional visual effect is applied on the display 110. The visual object 144 may include, as an example without limitation, preset text such as "save copy". Together with the visual objects 142 and 144, the electronic device 101 may further display a visual object (e.g., a button including preset text such as "save as wallpaper") to set the video 150 as a background screen of the electronic device 101.

Referring to FIG. 1, the electronic device 101 may receive an input with respect to the visual object 144 in the state 192 in which the visual object 144 indicating storage of the result is displayed together with the result of application of the three-dimensional visual effect including the first video 150. Based on receiving the input with respect to the visual object 144, the electronic device 101 may store the first video 150, which is displayed on the display 110, as the result.

According to an embodiment, the electronic device 101 may select or determine a three-dimensional visual effect to be applied to the image 120 using a position of the object in the image 120, a size of the object in the image 120 and/or depth distribution in the image 120 in which the foreground object 152 is represented. For example, in case that another object positioned closer to the camera than the foreground object 152 is captured at a time of capturing the image 120, a motion of the foreground object 152 caused by the three-dimensional visual effect may represent an unnatural state covering the other object. For example, in case that both foreground object 152 and a shadow generated from foreground objects 152 are captured, the motion of the foreground object 152 caused by the three-dimensional visual effect may represent the foreground object 152 separated from the shadow.

According to an embodiment, the electronic device 101 may change or may determine the three-dimensional visual effect and/or an attribute of the three-dimensional visual effect to be applied to the image 120 using information related to the foreground object 152. For example, since the three-dimensional visual effect suitable for a characteristic of the foreground object 152 is applied to the image 120, the electronic device 101 may generate or display a video (e.g., the first video 150) representing a natural motion of the foreground object 152. For example, in case that another object that is positioned closer to the camera than the foreground object 152 is captured at the time of capturing the image 120, the electronic device 101 may represent only a natural motion (or a motion that follows a physical law) of the foreground object 152 by applying a three-dimensional visual effect that prevents the foreground object 152 from covering the other object as the image 120. By representing only natural motion of the foreground object 152, the electronic device 101 may enhance a depth sense, a three-dimensional sense, and/or an immersion sense of a user for viewing the result (e.g., the first video 150) of application of the three-dimensional visual effect to the image 120.

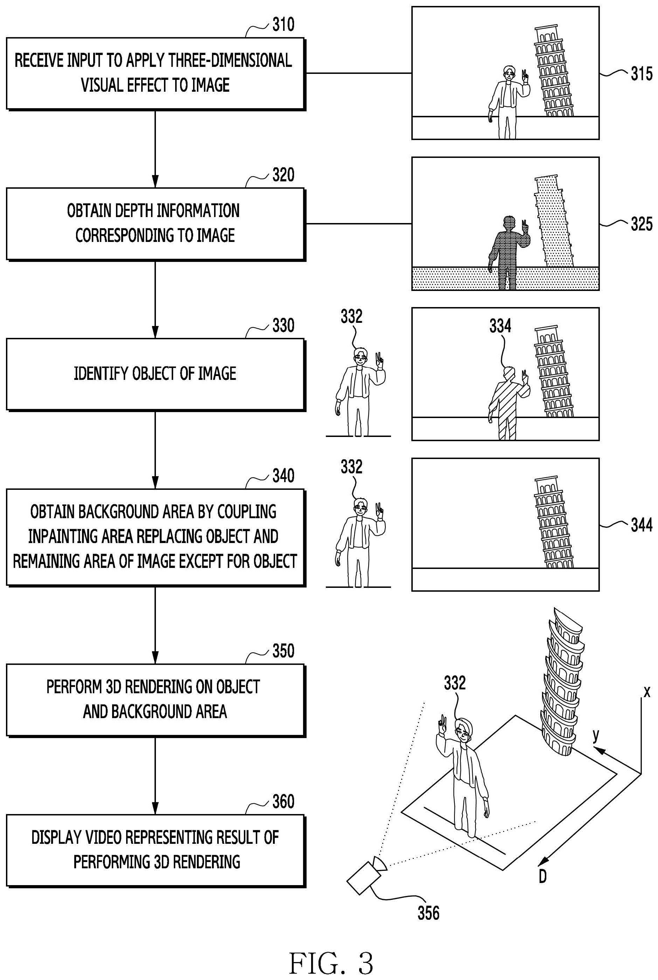

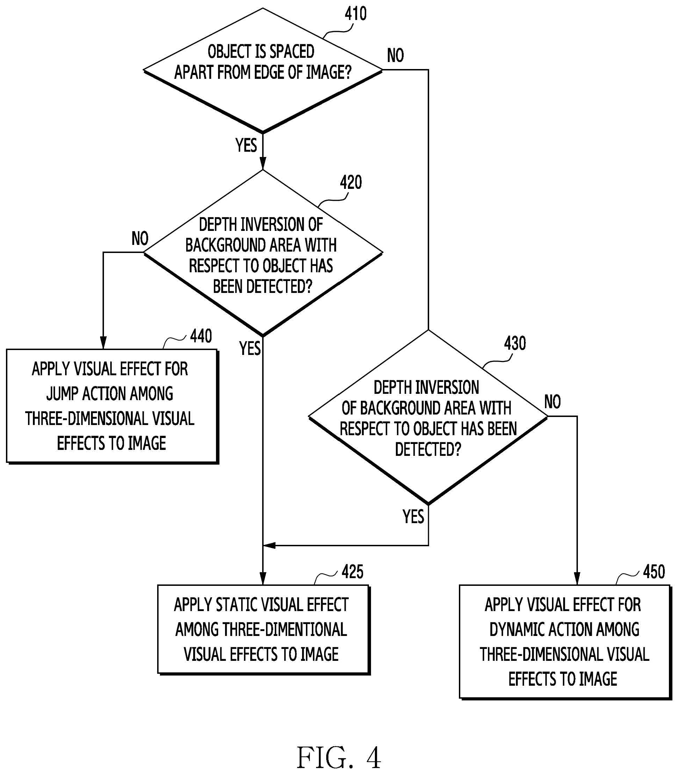

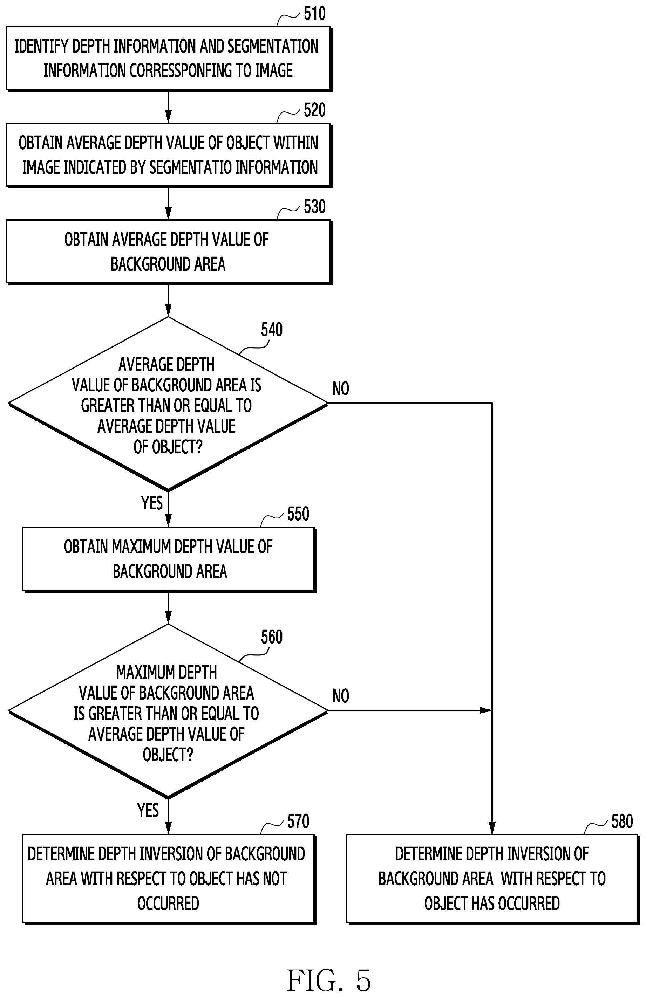

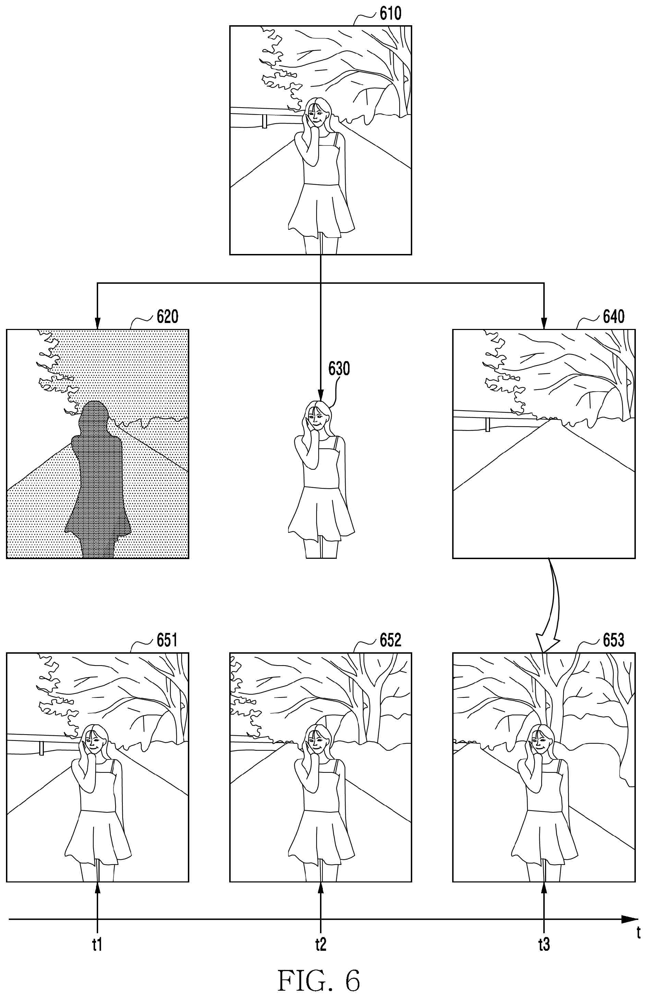

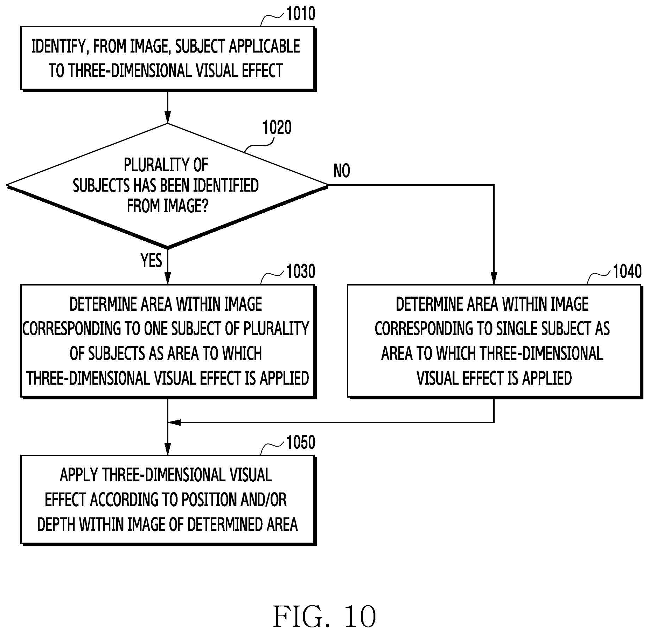

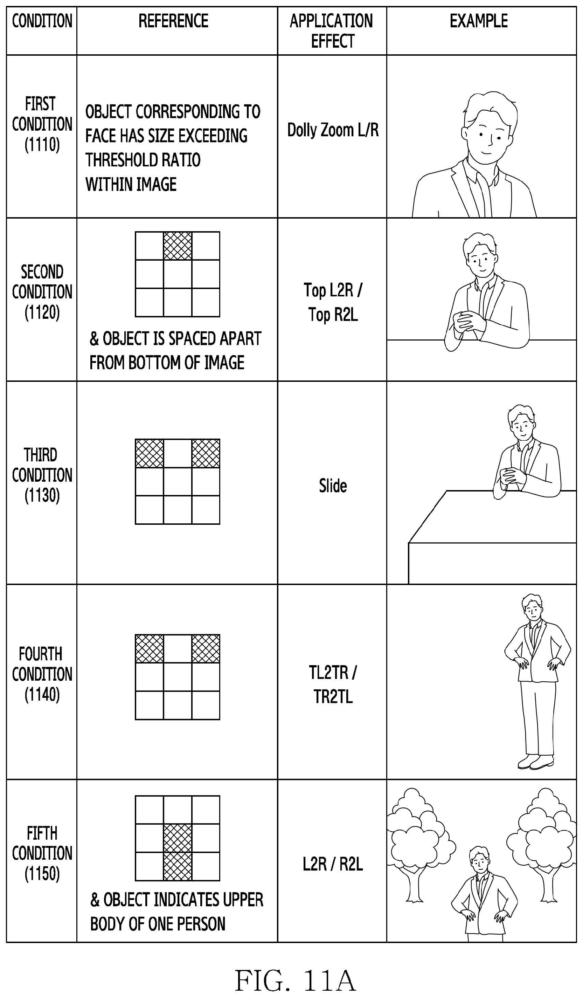

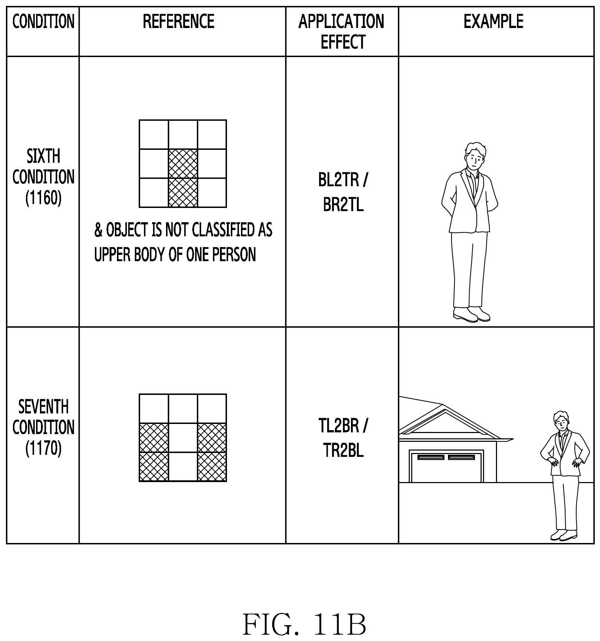

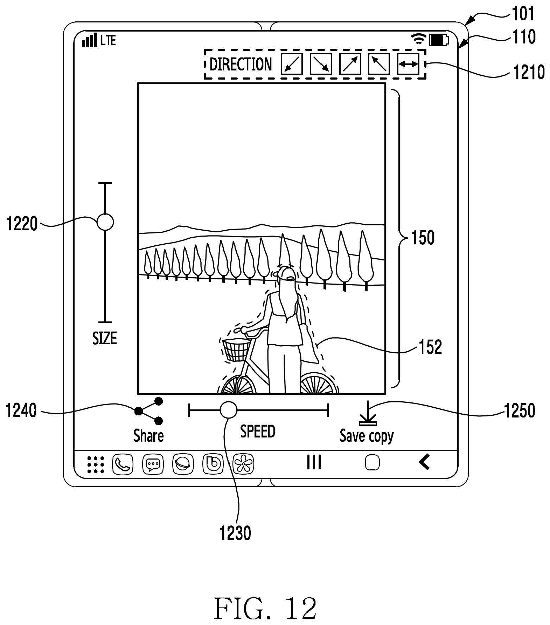

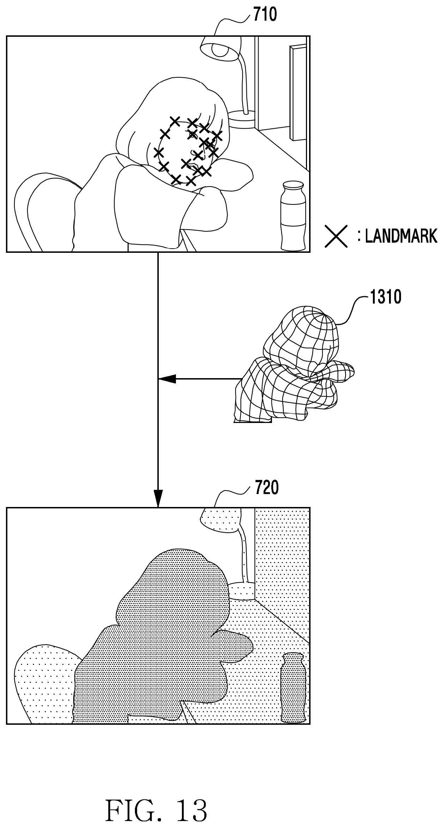

The present disclosure may be related to the electronic device 101 that changes or determines the three-dimensional visual effect and/or the attribute of the three-dimensional visual effect to be applied to the image 120. An operation of the electronic device 101 applying the three-dimensional visual effect to be applied to the image 120 is described with reference to FIG. 3. An operation of the electronic device 101 selecting the three-dimensional visual effect to be applied to the image 120, or changing or determining the attribute of the three-dimensional visual effect is described with reference to FIGS. 4 and/or 5. Examples in which the electronic device 101 that identifies each of exemplary images applies distinct three-dimensional visual effects will be described with reference to FIGS. 6 to 9. An exemplary operation in which the electronic device 101 identifies the foreground object 152, which is a reference applying the three-dimensional visual effect, from the image 120 is described with reference to FIG. 10. Three-dimensional visual effects applicable to the image 120 by the electronic device 101 will be described with reference to FIGS. 11A and/or 11B. An operation in which the electronic device 101 receives a user input to change the attribute of the three-dimensional visual effect will be described with reference to FIG. 12. An exemplary operation in which the electronic device 101 generates depth information on the image 120 used to apply the three-dimensional visual effect to the image 120, is described with reference to FIG. 13.

FIG. 2 is a block diagram of an electronic device 101 according to an embodiment. Referring to FIG. 2, an electronic device 101 may be one of various types of electronic devices, such as a laptop personal computer (PC) 290, smartphones 291 (e.g., a bar-type smartphone 291-1, a foldable smartphone 291-2 having a shape of the electronic device 101 of FIG. 1, or a slidable (or rollable) type smartphone 291-3) having various form factors, a tablet PC 292, a head-mounted display (HMD) device 293, a watch 294, a cellular phone (not illustrated), and other similar computing devices (not illustrated).

In an embodiment, the electronic device 101 may be referred to as a mobile device, a user equipment (UE) (or a user terminal), a multifunctional device, a portable communication device, a portable device, or a server. A form factor of the electronic device 101 is not limited to exemplary form factors illustrated in FIG. 2. For example, in some embodiments, the electronic device 101 may be included as an electronic control unit (ECU) in a vehicle (e.g., an electric vehicle (EV)). For example, the electronic device 101 may have a form suitable to display an image and/or a video.

Referring to FIG. 2, according to an embodiment, the electronic device 101 may include a processor 210 and memory 220. The electronic device 101 may further include a display 110. The processor 210 may be electrically and/or operably coupled with the memory 220 and/or the display 110. Electronic components being electrically coupled may include a state in which a wired signal path (or connection for wireless communication) for transmission of a signal is established between the electronic components. Electronic components being operably coupled may include a state in which the electronic components are directly coupled (or the electronic components are indirectly coupled) so that another electronic component is controlled by any one of the electronic components. Referring to FIG. 2, electrical connection between the processor 210, the memory 220, and the display 110 based on an electronic component, referred to as a communication bus 202, is schematically illustrated. The processor 210, the memory 220, and the display 110 may be communicatively coupled through the communication bus 202.

Referring to FIG. 2, the processor 210 of the electronic device 101 may include circuitry (e.g., processing circuitry and/or a core) to perform an calculation (e.g., an arithmetic calculation and/or a logical calculation) on data. A binary code (e.g., an instruction) indicating the calculation may be inputted to the processor 210. The processor 210 may include a central processing unit (CPU), a graphic processing unit (GPU), and/or a neural processing unit (NPU). The processor 210 may be referred to as an application processor (AP) and/or a system on a chip (SoC). The processor 210 may have a structure (a multi-core structure based on a combination of a plurality of core circuits such as a dual core, a quad core, a hexa core, or an octa core) to simultaneously load (or fetch) and/or execute a plurality of instructions. In the electronic device 101 including at least one processor including the processor 210, the at least one processor may perform operations of the present disclosure individually or collectively. For example, the at least one processor may perform operations of FIGS. 3 to 5 and/or 10 individually and/or collectively, by executing instructions stored in the memory 220.

The memory 220 of FIG. 2 may include circuitry to store data (or instructions) inputted to or outputted from the processor 210. The memory 220 may include volatile memory such as random-access memory (RAM) and/or non-volatile memory such as read-only memory (ROM). The non-volatile memory may be referred to as a storage. For example, the volatile memory may include at least one of dynamic RAM (DRAM), static RAM (SRAM), Cache RAM, and pseudo SRAM (PSRAM). For example, the non-volatile memory may include at least one of programmable ROM (PROM), erasable PROM (EPROM), electrically erasable PROM (EEPROM), flash memory, a hard disk, a compact disk, a solid state drive (SSD), and an embedded multimedia card (eMMC). The memory 220 may include one or more storage mediums (e.g., the volatile memory and/or the nonvolatile memory as described above) positioned in the electronic device 101 in a distributed manner. The processor 210 of the electronic device 101 may perform a function and/or an operation (e.g., the operations of FIGS. 3 to 5 and/or 10) indicated by the instructions, by executing instructions of the memory 220 in the electronic device 101.

The display 130 of the electronic device 101 may include circuitry to visualize information provided from the processor 210. The display 110 may include a liquid crystal display (LCD), a plasma display panel (PDP), and/or light emitting diodes (LEDs). The LED may include an organic LED (OLED). However, embodiments are not limited thereto, and the display 110 may include electronic paper. A display area (or an active area) of the display 110 may include an area through which light is emitted, formed by pixels (e.g., activated pixels) of the display 110. The display 110 may include a sensor (e.g., a touch sensor) to detect an external object (e.g., a user's finger) on the display 110. The sensor may be included in the display 110 in a form of a panel (e.g., a touch sensor panel (TSP)).

Referring to FIG. 2, programs (e.g., a salient object detector 241, a depth detector 242, a depth inversion detector 243, a float detector 244, a pixel unprojector 245, and/or a three-dimensional (3D) renderer 246) executed by the processor 210 to process an image 230 (e.g., the image 120 of FIG. 1) are illustrated. The programs may be installed (e.g., a set of instructions, and resources, referred to as a package) independently in the memory 220, or may be stored in the memory 220 as a sub-routine (or an applet or a dynamic link library (DLL)) of a single program.

According to an embodiment, the processor 210 of the electronic device 101 may detect a foreground object (e.g., a subject) related to the image 230, by executing the salient object detector 241. By executing the salient object detector 241, the processor 210 may divide an area related to the object within the image 230. For example, the processor 210 may obtain or generate information indicating a position, a size, and/or a form of the area related to the object. To obtain the information, the salient object detector 241 may include an artificial intelligence model trained to output the information from a color distribution of the image 230. The artificial intelligence model, which is a computational model designed to simulate a neural activity (or a cognitive activity) of an organism, may include a program, hardware (e.g., NPU and/or GPU), or any combination thereof to perform calculations indicated by the computational model. For example, in an embodiment, the artificial intelligence model may be trained with color distributions of images that have areas having objects with known positions, sizes, and/or forms in the images. The salient object detector 241 may input a color distribution of the image 230 into the trained artificial intelligence model, and may receive as output from the trained artificial intelligence model the information on the position, the size, and/or the form of the area related to the object in the image 230.

According to an embodiment, the processor 210 of the electronic device 101 may calculate or estimate depth values respectively corresponding to pixels of the image 230 indicating two-dimensional color distribution, by executing the depth detector 242. A set of the depth values and/or the two-dimensional distribution of the depth values may be referred to as depth information and/or a depth map. The depth values respectively corresponding to the pixels may indicate a distance (or a relative value of the distance) between a subject corresponding to a pixel and a camera used to capture the image 230. The depth detector 242 may include a program to decode and/or extract depth information (e.g., sensor data of a time-of-flight (ToF) camera and/or light detection and ranging (LiDAR), which operated at a time of capturing the image 230) included in metadata of the image 230. For example, the depth information may be indicated by the sensor data of a ToF sensor and/or a LiDAR sensor, which was obtained with the image 230. The depth detector 242 may output the depth values respectively corresponding to the pixels of the image 230, or may include a computational model (e.g., an artificial intelligence model) trained to estimate the depth information. For example, in an embodiment, the artificial intelligence model may be trained with pixels of images where a distance (or a relative value of the distance) between a subject corresponding to a pixel and a camera used to capture the image is known. The depth detector 242 may input pixel values of the image 230 into the trained artificial intelligence model, and may receive as output from the trained artificial intelligence model estimated depth information.

According to an embodiment, the processor 210 of the electronic device 101 may detect or check another object (e.g., a subject included in a background area) positioned closer to the camera that captured the image 230 than a foreground object (e.g., the foreground object 152 of FIG. 1) from the depth information corresponding to the image 230, by executing the depth inversion detector 243. The depth inversion detector 243 may detect or check an external object disposed between the foreground object and the camera at the time the image 230 was captured, by comparing depth values of an object of the image 230 detected by the salient object detector 241 and depth values of a remaining area (e.g., the background area) of the image 230 different from an area in which the object is displayed.

According to an embodiment, the processor 210 of the electronic device 101 may check a position and/or a size of the object within the image 230, by executing the float detector 244. For example, the processor 210 may calculate, or identify a distance between the object and an edge (e.g., a bottom of the image 230) of the image 230. For example, the processor 210 may identify whether the object is spaced apart from the edge of image 230. The processor 210 checking the distance between the edge of the image 230 and the object may check or determine whether the distance is greater than a preset threshold. The distance (e.g., a minimum value of a distance between pixels included in the area where the object is displayed and the edge) between the edge of the image 230 and the object checked by executing the float detector 244 may be used to determine (or select) a three-dimensional visual effect to be applied to the image 230. The processor 210 may check a distance of the object (e.g., the salient object) being spaced apart from a bottom portion of the image 230, by executing the float detector 244. The processor 210 may check whether the object is spaced apart from the bottom portion by exceeding a reference distance (e.g., a reference distance to change the three-dimensional visual effect).

According to an embodiment, the processor 210 of the electronic device 101 may obtain or determine a three-dimensional coordinate (e.g., a spatial coordinate) corresponding to the pixels included in the image 230, by executing the pixel unprojector 245. The three-dimensional coordinate may be referred to as a vertex (or a voxel) indicating a three-dimensional point within a virtual space. By executing the pixel unprojector 245, the processor 210 may obtain or generate three-dimensional distribution (e.g., a point cloud) of the pixels included in the image 230. The processor 210 executing the pixel unprojector 245 may generate or determine three-dimensional coordinate of each of the pixels of the image 230, using the depth information (e.g., the depth map) generated by the depth detector 242.

According to an embodiment, the three-dimensional (3D) renderer 246 of the electronic device 101 may perform three-dimensional rendering with respect to the image 230, based on three-dimensional coordinates generated by the pixel unprojector 245. For example, the processor 210 may dispose a virtual camera within a virtual space including the three-dimensional coordinates. The three-dimensional rendering with respect to the image 230 may include generating an image indicating a view of the virtual space viewed from the virtual camera. By executing the 3D renderer 246, the processor 210 may render, or generate a two-dimensional image from a three-dimensional scene generated by the pixel unprojector 245. For example, the processor 210 may render the two-dimensional image, using a viewpoint and/or a position of the virtual camera.

According to an embodiment, the processor 210 may apply the three-dimensional visual effect to the image 230. For example, based on the three-dimensional visual effect, the three-dimensional coordinates generated by executing the pixel unprojector 245 may be at least partially changed. For example, the processor 210 may move three-dimensional coordinates of pixels corresponding to the object differently from three-dimensional coordinates of pixels corresponding to the background area. For example, the processor 210 may move a coordinate of the virtual camera formed within the virtual space to a direction and/or a position related to the three-dimensional visual effect. While moving the three-dimensional coordinate of the pixels and/or the three-dimensional coordinate of the virtual camera, the processor 210 may generate or obtain an animation and/or a video (e.g., the first video 150 of FIG. 1) representing the image 230 to which the three-dimensional visual effect is applied, by performing rendering based on the 3D renderer 246.

According to an embodiment, the electronic device 101 may change or determine a degree to which a three-dimensional visual effect (or a parallax effect) is applied, by analyzing the image 230. For example, the electronic device 101 may change or may determine the degree to indicate a natural motion between an salient object of the image 230 and the background object.

In the present disclosure, generating the animation and/or the video representing the image 230 to which the three-dimensional visual effect is applied is described, but embodiments are not limited thereto. For example, in an embodiment in which the electronic device 101 is the HMD device 293, the HMD device 293 may generate or display a spatial video and/or a spatial image indicating a three-dimensional motion of the background area with respect to the object by applying a three-dimensional visual effect to the image 230. For example, the point cloud rendered by the pixel unprojector 245 and corresponding to the pixels of the image 230 may be displayed three-dimensionally to a user wearing the HMD device 293 based on binocular parallax. For example, the HMD device 293 may project each of images and/or videos with the binocular parallax to each of two eyes of the user wearing the HMD device 293, by using the binocular parallax respectively corresponding to the depth values of the pixels of the image 230.

As described above, according to an embodiment, the electronic device 101 may select or determine the three-dimensional visual effect to be applied to the image 230, by using information identified by the salient object detector 241, the depth inversion detector 243, and/or the float detector 244 as well as the depth information corresponding to the image 230 measured by the depth detector 242. Since the depth information and additional information are used, the electronic device 101 may more accurately divide or extract the object from the image 230. The electronic device 101 may select the three-dimensional visual effect suitable for the image 230, and may apply the three-dimensional visual effect selected as the image 230. By applying the three-dimensional visual effect suitable to the image 230, the electronic device 101 may provide an immersive user experience for a result of applying the three-dimensional visual effect.

Hereinafter, exemplary operations of the electronic device 101 and/or the processor 210 applying the three-dimensional visual effect to the image 230 will be described with reference to FIG. 3.

FIG. 3 illustrates a flowchart of an electronic device according to an embodiment. The electronic device of FIG. 3 may include the electronic device 101 of FIG. 1 and/or FIG. 2. Operations of FIG. 3 may be performed by the electronic device 101 and/or the processor 210 of FIG. 2. The operations of FIG. 3 may be performed, based on execution of the programs (e.g., the salient object detector 241, the depth detector 242, the depth inversion detector 243, the float detector 244, the pixel unprojector 245, and/or the 3D renderer 246) illustrated in FIG. 2.

An order in which the operations of FIG. 3 are performed may vary according to an embodiment. For example, according to an embodiment, the electronic device may perform the operations of FIG. 3 differently from an order illustrated in FIG. 3, or may perform at least two operations substantially simultaneously.

Referring to FIG. 3, in operation 310, according to an embodiment, a processor of the electronic device may receive an input to apply a three-dimensional visual effect to an image 315. The input may include an input indicating selection of a visual object 130 described with reference to FIG. 1. The input may be detected based on a touch gesture on the display (e.g., the display 110 of FIG. 1 and/or FIG. 2), a click received through a mouse, a gaze of a user (e.g., a gaze of a user wearing the HMD device 293 of FIG. 2) identified through a sensor (e.g., an eye-tracking camera (ET-CAM)), and/or a speech of the user.

Referring to FIG. 3, in operation 320, according to an embodiment, the processor of the electronic device may obtain depth information 325 corresponding to the image 315. The operation 320 may be performed by executing the depth detector 242 of FIG. 2. The processor may obtain the depth information 325 including depth values corresponding to each of pixels of the image 315. According to an embodiment, the processor may obtain the depth information 325 from metadata corresponding to the image 315. For example, the depth information 325 may be included in a file including the image 315 according to an exchangeable image file format (EXIF). According to an embodiment, the processor of the electronic device may further use a characteristic of a content included in the image 315 as well as the depth information 325 obtained based on the operation 320 to provide a natural three-dimensional visual effect when applying the three-dimensional visual effect to the image 315.

Referring to FIG. 3, in operation 330, according to an embodiment, the processor of the electronic device may identify an object 332 of the image 315. The processor may perform the operation 330, by executing the salient object detector 241. The processor may obtain or generate information indicating a probability that each of the pixels of the image 315 corresponds to an object. The information may be referred to as segmentation information, a segmentation map, salient information, and/or a salient map. The probability may be obtained for each of the pixels of the image 315, using an artificial intelligence model for object detection. For example, the processor may obtain the segmentation information corresponding to the image 315, using the artificial intelligence model for the object detection described above. The processor may identify a position, a size, and/or a form of the object 332 within the image 315, using the segmentation information.

Referring to FIG. 3, in operation 340, according to an embodiment, the processor of the electronic device may obtain a background area 344, by coupling an inpainting area 334 replacing the object 332 and a remaining area of the image except for the object. For example, the background area 344 may include the inpainting area 334 and the remaining area of the image 315 different from the object. For example, the processor may obtain the inpainting area 334 that replaces the object by performing inpainting with respect to the object 332. The inpainting area 334 may correspond to a portion where the object 332 is positioned.

In an embodiment, inpainting with respect to the object 332 may be obtained from a computational model (e.g., a computational model referred to as a generative artificial intelligence) to which the image 315 is inputted (or another image in which the inpainting area 334 is filled with a preset color such as black). The computational model may be an artificial intelligence model trained to determine colors of pixels of the inpainting area 334, based on a content of the remaining portion of the image 315 different from the inpainting area 334. The computational model may further receive a natural language sentence (e.g., a prompt) describing a content to be represented through the inpainting area 334. The artificial intelligence model may be executed (e.g., an on-device model) by the electronic device, or an external electronic device (e.g., a server) connected with the electronic device through communication circuitry. The artificial intelligence model may be trained to generate the inpainting area 334 matching the background area 344 of the image 315, by receiving a prompt generated based on a color of the pixels of the image 315 adjacent to the object 332 and/or an analysis result of the image 315.

Referring to FIG. 3, in operation 350, according to an embodiment, the processor of the electronic device may perform 3D rendering with respect to the object 332 and the background area 344. The processor may perform the operation 350, by executing a pixel unprojector 245 and/or the 3D renderer 246 of FIG. 2. Referring to FIG. 3, the processor may generate a virtual space including the object 332 and the background area 344. According to the depth values corresponding to each of the pixels of the image 315, the pixels may be disposed within the virtual space. Referring to FIG. 3, the depth values of the pixels corresponding to the object 332 may be smaller than depth values of the pixels corresponding to the background area 344, or may indicate a depth closer to the depth values of the pixels corresponding to the background area 344.

Referring to FIG. 3, the processor may perform rendering of the operation 350, using a virtual camera 356 disposed within the virtual space. However, embodiments are not limited to rendering based on the virtual camera 356, and rendering of the operation 350 may be performed based on a virtual user's view. For example, rendering of the operation 350 may include generating an image and/or a video indicating a view of the virtual space viewed from the virtual camera 356. Applying the three-dimensional visual effect may include generating a video and/or an animation indicating a motion of the background area 344 with respect to the object 332, by gradually changing a position of at least one of the object 332, the background area 344, or the virtual camera 356 within the virtual space. According to an embodiment, the electronic device may (automatically) generate or propose the three-dimensional visual effect to be applied to the image 315 and/or movement of the virtual camera 356. For example, the electronic device may display a user interface (UI) to change a moving direction, speed, and/or a trajectory of the virtual camera 356. Through the UI, the electronic device may receive an input to change a setting value of the virtual camera 356 and/or the three-dimensional visual effect from the user. Based on the input, the electronic device may perform rendering in operation 360.

Referring to FIG. 3, in the operation 360, according to an embodiment, the processor of the electronic device may display a video (e.g., the first video 150 of FIG. 1) representing a result of performing 3D rendering. The video may indicate the image 315 to which the three-dimensional visual effect is applied. In order to apply the three-dimensional visual effect, information indicating distinct three-dimensional visual effects may be stored in memory (e.g., the memory 220 of FIG. 2) of the electronic device. The processor may identify the information indicating the three-dimensional visual effects from the memory. The information indicating the three-dimensional visual effect may be defined with respect to key frames of the video of the operation 360, which is a result of applying the three-dimensional visual effect. A key frame may be described as a reference frame with respect to other adjacent frames in a time domain in a sequence of images (or image frames) included in the video. For example, in the time domain, colors of pixels in the other frames adjacent to the key frame may be set as a difference value with respect to a color of pixels in the key frame.

For example, the information indicating the three-dimensional visual effect may indicate a position of at least one of the object 332, the background area 344, and the virtual camera 356 in each of a plurality of key frames included in the video. For example, the information may include a horizontal position (e.g., a position on a y-axis of FIG. 3) of a first layer corresponding to the background area 344, a horizontal position (e.g., a position on the y-axis of FIG. 3) of a second layer corresponding to the object 332, and a horizontal position (e.g., a position on the y-axis of FIG. 3) of the virtual camera 356 that is moved for three-dimensional rendering within a virtual space including the first layer and the second layer. The horizontal position may be represented as a coordinate value of the y-axis. The information may be represented in a format such as JavaScript object notification (JSON). Exemplary information loaded to apply the three-dimensional visual effect will be described with reference to FIG. 6.

Hereinafter, referring to FIG. 4, when rendering the operations 350 and 360, an operation of the electronic device that determines a motion of the object 332, the background area 344, and the virtual camera 356 will be described.

FIG. 4 illustrates an operation of an electronic device that determines a three-dimensional visual effect to be applied to an image, using a position of an object and/or depth distribution of the image including the object, according to an embodiment. The electronic device of FIG. 4 may include the electronic device 101 of FIG. 1 and/or FIG. 2. Operations of FIG. 4 may be performed based on execution of the programs (e.g., the salient object detector 241, the depth detector 242, the depth inversion detector 243, the float detector 244, the pixel unprojector 245, and/or the 3D renderer 246) illustrated in FIG. 2. The operations of FIG. 4 may be performed by the electronic device 101 and/or the processor 210 of FIG. 2.

An order in which the operations of FIG. 4 are performed may vary according to an embodiment. For example, according to an embodiment, the electronic device may perform the operations of FIG. 4 differently from an order illustrated in FIG. 4, or may perform at least two operations substantially simultaneously.

Referring to FIG. 4, in operation 410, according to an embodiment, a processor of the electronic device may detect or determine whether an object is spaced apart from an edge of an image (e.g., the image 120 of FIG. 1, the image 230 of FIG. 2, and/or the image 315 of FIG. 3). According to an embodiment, in order to detect whether the object is spaced apart from the edge of the image 315, the electronic device may check whether the object is spaced apart from a bottom of the image 315 according to whether the object is spaced apart from the edge of the image 315 by a threshold distance. The threshold distance may be preset. In the operation 410, the processor may check whether the object is floating. Floating the object may be described in a state in which a foreground object represented by the object is not cut by a field of view (FoV) (or an angle of view) of a camera capturing the image. For example, in case that an entire foreground object is represented through the image, or the object is spaced apart from the edge such as the bottom of the image, the object may be described as floating.

The operation 410 of FIG. 4 may be performed by executing the salient object detector 241 of FIG. 2. The processor detecting the object may perform the operation 410, using a position, a form, and/or a size of the object in the image. For example, the processor may identify a minimum value of y-coordinate values of pixels included in the object. In case that the minimum value is different from the y-coordinate value corresponding to the bottom of the image, the processor may determine that the object is spaced apart from the edge of the image. However, embodiments are not limited thereto, and the processor may determine that the object is spaced apart from the edge of the image in case that the object is spaced apart from the edge of the image by exceeding a preset threshold.

For example, the processor may perform operation 410, by executing a pseudo code of Table 1.

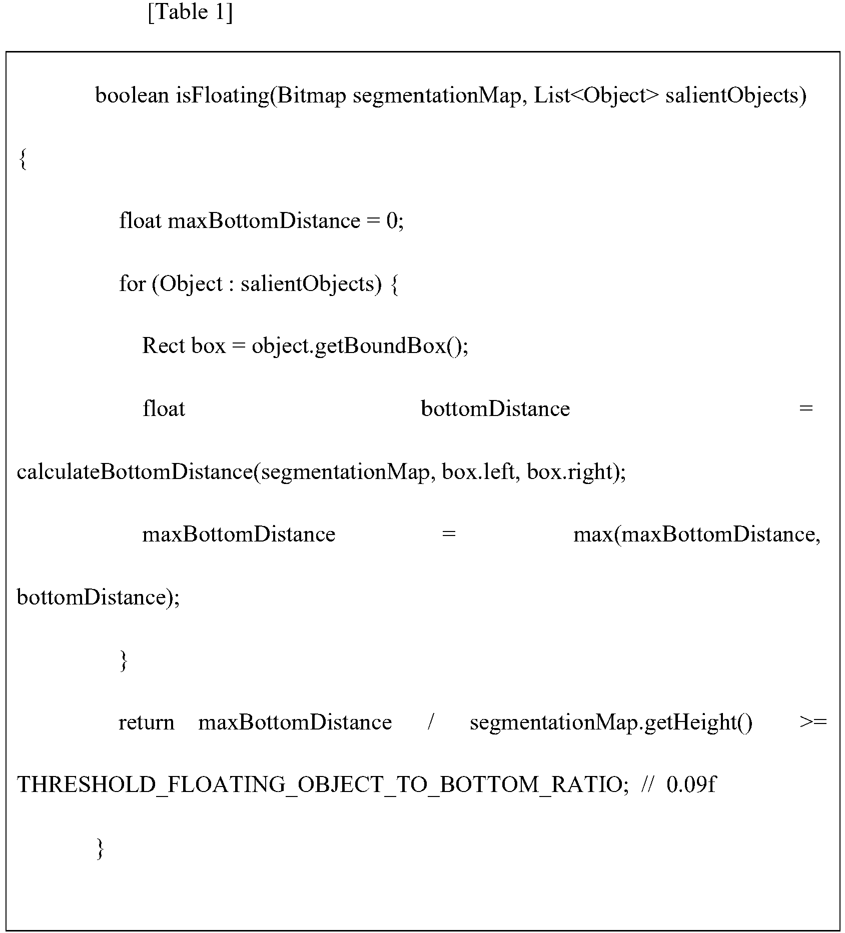

Referring to Table 1, the processor may repeatedly perform the operation 410 with respect to each of foreground objects included in a list (e.g., List<Object> salientObjects). The foreground object may include a face, a person, and/or an animal that may be identified as a salient object. Referring to Table 1, based on a threshold (e.g., THRESHOLD_FLOATING_OBJECT_TO_BOTTOM_RATIO), it may be determined whether an object corresponding to the foreground object is spaced apart from the edge of the image (e.g., the bottom of the image). The threshold may be preset. Referring to Table 1, in case that a plurality of foreground objects is identified from the image, the determination may be determined by comparing a ratio (maxBottomDistance / segmentationMap.getHeight()) between a distance an object positioned lowest within the image being spaced apart from the edge among objects corresponding to each of the plurality of foreground objects and a size of the image and the threshold. The distance that the object is spaced apart from the edge may be obtained by executing a function (calculateBottomDistance) of pseudo code of Table 1. For example, in case that the threshold is 0.09, and in case that the ratio is greater than 9%, it may be determined that the object is spaced apart from the edge of the image.

Referring to FIG. 4, in case that the object is spaced apart from the edge of the image (operation 410, YES), the processor may perform operation 420. In case that the object is not spaced apart from the edge of the image (e.g., in case that the object is in contact with the edge, or in case that the object includes the edge) (operation 410, NO), the processor may perform operation 430.

Referring to FIG. 4, in the operation 420 and/or the operation 430, according to an embodiment, the processor of the electronic device may determine or decide whether depth inversion of the background area with respect to the object has been detected. For example, the depth inversion may indicate an additional object having a depth lower than a depth of the object and/or a case in which at least one portion of the background area exists. The operations 420 and 430 may be performed by executing the depth detector 242 and/or the depth inversion detector 243 of FIG. 2. An example of detecting the depth inversion of the operations 420 and 430 will be described with reference to FIG. 5.

In order to detect the depth inversion of the operations 420 and 430, the processor may identify depth information corresponding to the image of the operation 410. From the depth information, the processor identifying at least a portion of the background area that is indicated to have a distance lower than a distance between the object and the camera capturing the image, may determine that the depth inversion has been detected. From the depth information, in case that an entire background area has a distance greater than a distance between the object and the camera, the processor may determine that the depth inversion has not been detected.

Referring to FIG. 4, in case that the depth inversion is detected in the operation 420 (420-Yes), the processor may perform operation 425. In the operation 420, in case that the depth inversion is not detected (420-No), the processor may perform operation 440. In the operation 430, in case that the depth inversion is detected (430-Yes), the processor may perform operation 425. In operation 430, in case that the depth inversion is not detected (430-No), the processor may perform operation 450.

Referring to FIG. 4, in the operation 450, according to an embodiment, the processor of the electronic device may apply a visual effect for a dynamic action to the image, among three-dimensional visual effects. The processor may identify information indicating the three-dimensional visual effect. The processor may apply the three-dimensional visual effect indicated by the information to the image without changing or reducing the information. For example, the information may be indicated in a JSON format of Table 2.

**[Table 2]**

| Line Number | Content of Information |
|---|---|
| 1 | "keyframes": [ |
| 2 | { "time": 0.0, "layer_position[0].x": -0.09, "layer_position[1].x": 0.01, "camera_eye_x": -0.1, "camera_dir_x": 0.1}, |
| 3 | { "time": 1.0, "layer_position[0].x": 0.09, "layer_position[1].x": -0.01, "camera_eye_x": 0.1, "camera_dir_x": -0.1} |
| 4 | ] |

Referring to Table 2, a JSON object having a name of "keyframes" may be defined. Square brackets of line number 1 and 4 may indicate that the JSON object having the name of "keyframes" includes numerical values between the square brackets. Line number 2 may indicate a horizontal position ("layer_position[0].x": -0.09) of a background area, a horizontal position ("layer_position[1].x": 0.01) of an object, a horizontal position ("camera_eye_x": -0.1) of a virtual camera, and a direction ("camera_dir_x": 0.1) of the virtual camera in a key frame corresponding to time = 0.01. The key frame corresponding to the time = 0.0 may correspond to time at which an animation starts. For example, the time = 0.0 may correspond to the time at which the animation starts. For example, the time = 0.0 may indicate, as the virtual camera moves based on the object, the time when the animation representing the motion of the background area starts. Line number 3 may, , indicate a horizontal position ("layer_position[0].x": 0.09) of the background area, a horizontal position ("layer_position[1].x": -0.01) of the object, a horizontal position ("camera_eye_x": 0.1) of the virtual camera, and a direction ("camera_dir_x": -0.1) of the virtual camera, in a key frame (e.g., another key frame after the key frame corresponding to time = 0.0) corresponding to time-= 1.0. However, embodiments are not limited thereto, and a direction ("layer_direction[0].x") of the background area may be defined to be changed according to the key frame. The key frame corresponding to the time = 1.0 may correspond to a key frame to be played at the time when the animation ends. For example, the time = 1.0 may correspond to the time at which the animation ends. The direction of the virtual camera may indicate an azimuth angle and/or a rotation angle of the virtual camera.

According to an embodiment, since not only movement (e.g., movement of a value of "layer_position[0].x") of an x-axis reference of the background area, but also the direction (e.g., movement of a value of "camera_dir_x") of the virtual camera is defined, the electronic device may generate an animation representing a dynamic motion of the virtual camera and/or a motion of the background area based on the object. Although an embodiment moving the background area, the object, and/or the virtual camera based on the horizontal position has been described, embodiments are not limited thereto, and information of Table 2 may be defined such that the background area, the object, and/or the virtual camera moves along a vertical axis.

The "time" of Table 2 is a relative value indicating a time point of the corresponding key frame, and, for example, may indicate a temporal position of the key frame in a time interval between 0 seconds (time = 0.0) and 4 seconds (time = 1.0) in case that a 4-second video is generated. For example, the key frame corresponding to the time = 0.0 may correspond to an image to be displayed in 0 seconds of a video representing an image to which the three-dimensional visual effect is applied. For example, the key frame corresponding to the time = 1.0 may correspond to an image to be displayed in 4 seconds of the video. The processor may render image frames included in the 4-second video by gradually moving the object, the background area, and the virtual camera within a virtual space, using the information defined such as Table 2.

Referring to FIG. 4, in operation 425, according to an embodiment, the processor of the electronic device may apply, among three-dimensional visual effects, a static visual effect to an image. For example, the processor may reduce a deviation of horizontal positions of the background area which is indicated by the information defined such as Table 2. For example, the processor may at least partially change a variable (e.g., layer_position[0].x) of the information so that the deviation of the horizontal positions of the background area across the key frames is reduced. As a horizontal position of at least one background area among the key frames is changed, a degree to which the background area is moved may be reduced. The processor may represent an image to which a static three-dimensional visual effect is applied, by generating a video including the background area that is moved along the horizontal position with reduced deviation.

Referring to FIG. 4, in the operation 440, according to an embodiment, the processor of the electronic device may apply, among three-dimensional visual effects, a visual effect for a jump action to an image. Based on a dynamic characteristic of the jump action, the processor may apply, among three-dimensional visual effects, a three-dimensional visual effect that emphasizes the dynamic characteristic to an image. When applying the three-dimensional visual effect based on the operation 440 to an image, unlike the operation 425, the processor may not adjust the deviation of the horizontal positions of the background area.

Referring to FIG. 4, the three-dimensional visual effects applied to the image may be summarized such as Table 3 according to whether the object is floating and/or whether depth inversion is detected.

**[Table 3]**

| | | Whether object is floating | |
|---|---|---|---|
| | | O | X |
| Depth inversion is detected | O | Static three-dimensional visual effect (operation 425) | Static three-dimensional visual effect (operation 425) |
| | X | Three-dimensional visual effect related to jump action (operation 440) | Three-dimensional visual effect related to dynamic action (operation 450) |

For example, the processor identifying, from the depth information, at least a portion of the background area having a depth lower than a depth between the object and the camera capturing the image may generate or display a video indicating an image to which a limited three-dimensional visual effect is applied. For example, based on identifying, from the depth information, the object having a depth lower than a depth of the background area, the three-dimensional visual effect to be applied to the image may be selected or determined, by further using information (e.g., segmentation information) indicating a position and/or a size of the object.

FIG. 5 illustrates an operation of an electronic device comparing depths of an object and a background area, according to an embodiment. The electronic device of FIG. 5 may include the electronic device 101 of FIG. 1 and/or FIG. 2. Operations of FIG. 5 may be performed based on execution of the program (e.g., the depth inversion detector 243) illustrated in FIG. 2. The operations of FIG. 5 may be performed by the electronic device 101 and/or the processor 210 of FIG. 2.

An order in which the operations of FIG. 5 are performed may vary according to an embodiment. For example, according to an embodiment, the electronic device may perform the operations of FIG. 5 differently from the order illustrated in FIG. 5, or may perform at least two operations substantially simultaneously.

Referring to FIG. 5, in operation 510, according to an embodiment, a processor of the electronic device may identify depth information and segmentation information corresponding to an image (e.g., the image 120 of FIG. 1, the image 230 of FIG. 2, and/or the image 315 of FIG. 3). The depth information may include a two-dimensional arrangement of depth values corresponding to each of pixels of the image. The segmentation information may include the two-dimensional arrangement of probabilities that each of the pixels of the image corresponds to a foreground object. The segmentation information may include a saliency map. The saliency map may include a two-dimensional image emphasizing an area having a high probability of being preferentially focused by a user and/or an area having a high probability of being recognized by a machine learning model within the image. For example, pixels of the saliency map may indicate importance of corresponding pixels of the image. In the operation 510, the processor may perform resizing with respect to the depth information and the segmentation information so that the depth information and the segmentation information have the same size. For example, the resizing may include normalization.

Referring to FIG. 5, in operation 520, according to an embodiment, the processor of the electronic device may obtain an average depth value of the object within the image, indicated by the segmentation information. The object may include pixels having probability exceeding a preset threshold probability. The electronic device may obtain or determine a bounding box having a form surrounding the object. The bounding box may be expanded by a margin (e.g., X_MARGIN and/or Y_MARGIN of Table 4) in directions of an x-axis and a y-axis. The processor may calculate an average depth value of pixels of an object included in the extended bounding box. The processor may reduce errors included in the depth values by applying a Gaussian blur (or a Gaussian filter) to the depth values of the pixels. By calculating the average of the depth values having a reduced error, the processor may obtain or calculate the average depth value of the operation 520.

Referring to FIG. 5, in operation 530, according to an embodiment, the processor of the electronic device may obtain an average depth value of the background area. The background area may correspond to a remaining area of the image different from the object of the operation 520. An average of depth values of pixels included in the background area may be determined as an average depth value of the operation 530.

Referring to FIG. 5, in operation 540, according to an embodiment, the processor of the electronic device may check whether the average depth value of the background area is greater than the average depth value of the object. In case that the average depth value of the background area is less than or equal to the average depth value of the object (540-No), the processor may perform operation 580. When the average depth value of the background area is less than or equal to the average depth value of the object, it may mean that the depth values of the background area are smaller on average than depth values of the object. In case that the average depth value of the background area is greater than the average depth value of the object (540-Yes), the processor may perform operation 550.

Referring to FIG. 5, in the operation 550, according to an embodiment, the processor of the electronic device may obtain a maximum depth value of the background area. For example, the processor may obtain or search a maximum value among depth values of pixels included in the background area.

Referring to FIG. 5, in operation 560, the processor of the electronic device according to an embodiment may check or determine whether the maximum depth value of the background area is greater than or equal to the average depth value of the object. For example, the processor may compare a combination of the average depth value of the object and a preset tolerance with the maximum depth value of the background area. In case that the maximum depth value of the background area is greater than or equal to the average depth value of the object, or the maximum depth value of the background area is equal to or greater than a sum of an average depth value of the foreground object and the tolerance (560-Yes), the processor may perform operation 570. In case that the maximum depth value of the background area is less than the average depth value of the object, or the maximum depth value of the background area is less than the combination (560-No), the processor may perform operation 580.

Referring to FIG. 5, in the operation 570, according to an embodiment, the processor of the electronic device may determine depth inversion of the background area with respect to the object has not occurred. For example, the processor may determine that any subject corresponding to the background area is disposed farther from the camera than the foreground object corresponding to the object. Based on the determination of the operation 570, the processor may perform any one of the operations 440 and 450 of FIG. 4.

Referring to FIG. 5, in the operation 580, according to an embodiment, the processor of the electronic device according to an embodiment may determine that the depth inversion of the background area with respect to the object has occurred. For example, the processor may determine that any one subject in the background area is disposed closer to the camera than the foreground object corresponding to the object. Based on the determination of the operation 580, the processor may perform the operation 425 of FIG. 4.

In an embodiment, the operations of FIG. 5 may be implemented based on a pseudo code of Table 4.

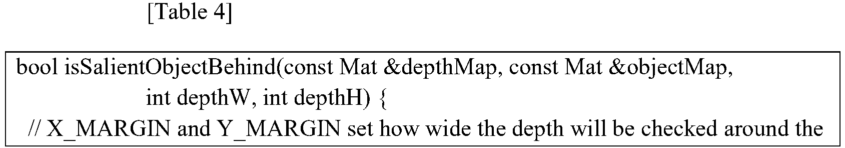

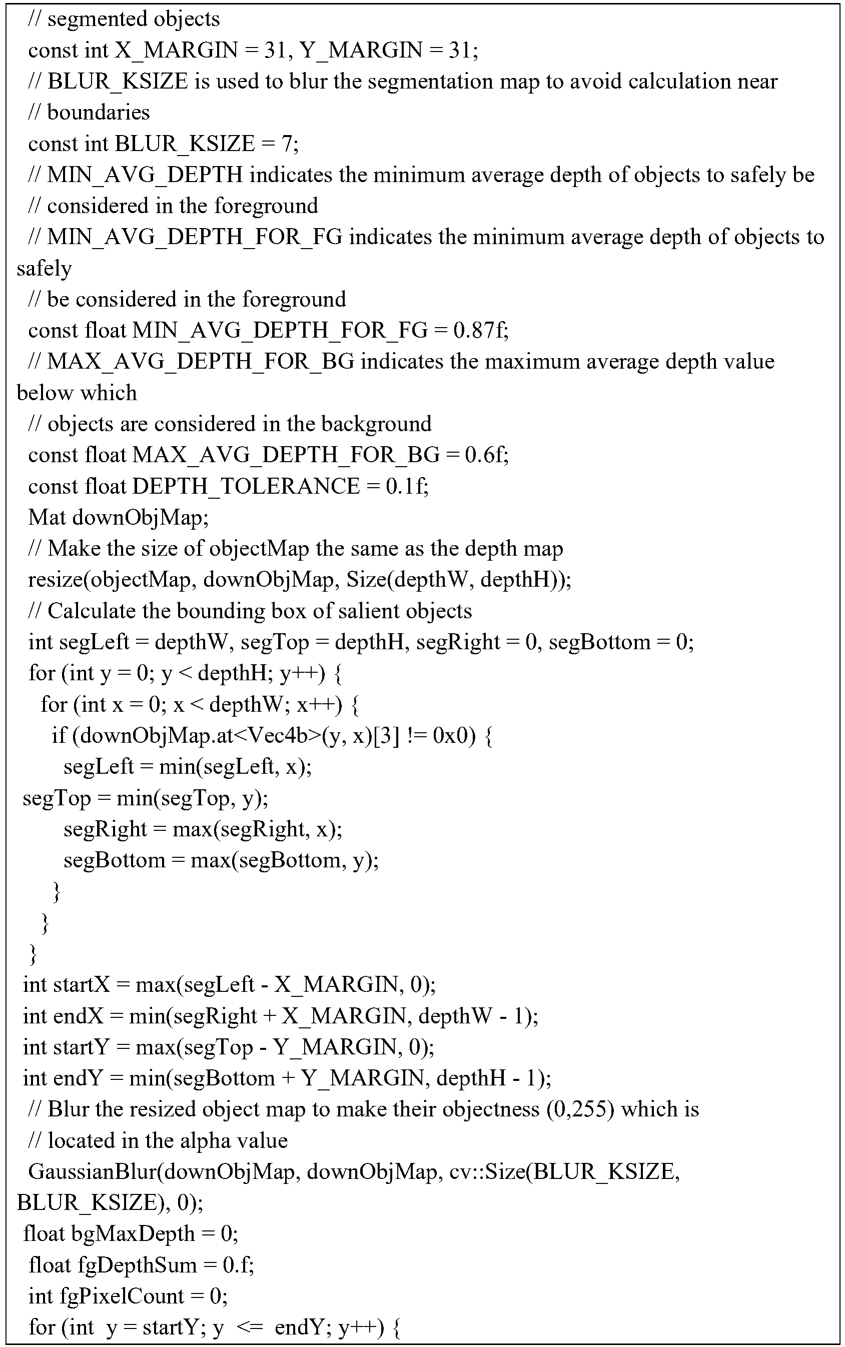

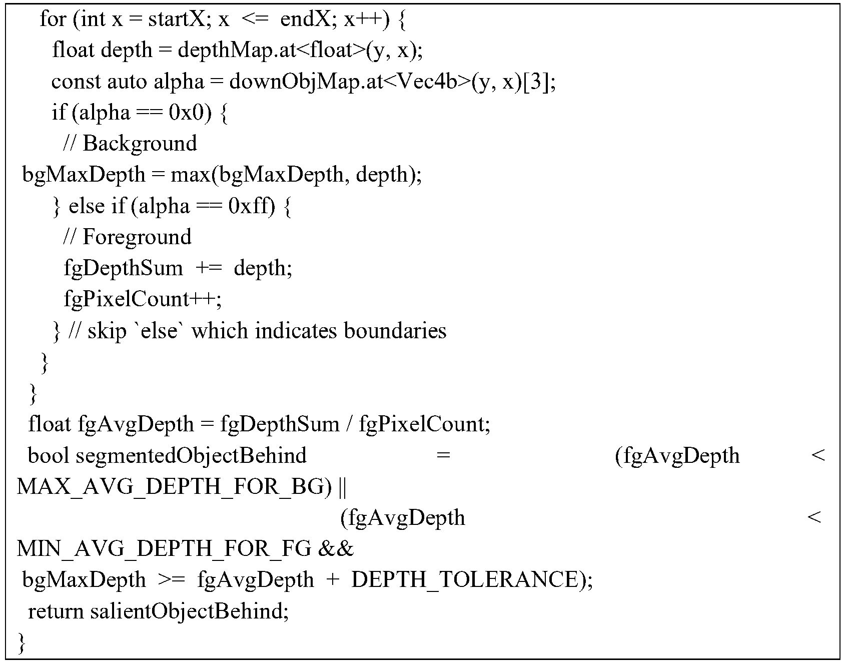

Hereinafter, exemplary operations in which the processor selects the three-dimensional visual effect to be applied to the image based on the object and/or the background area of the image will be described with reference to FIGS. 6 to 9.

FIG. 6 illustrates an operation of an electronic device applying a three-dimensional visual effect to an exemplary image 610, according to an embodiment. The electronic device of FIG. 6 may include the electronic device 101 of FIG. 1 and/or FIG. 2. An operation performed by the electronic device of FIG. 6 may be related to at least one of the operations of FIGS. 3 to 5.

Referring to FIG. 6, the exemplary image 610 is illustrated. The electronic device may obtain depth information 620 of the image 610. Referring to FIG. 6, density of dots of the depth information 620 may indicate a distance indicated by a depth value of the depth information 620. For example, density of dots of a portion of depth information 620 being higher than density of dots of another portion may indicate that depth values of the portion may be less than depth values of the other portion. That is, the density of dots of the portion of depth information 620 being higher may indicate that a subject related to the portion is disposed closer to a camera than a subject related to the other portion.

In an embodiment, the electronic device may identify an object 630 of the image 610. The object 630 may be identified, by using a model trained to process at least one of depth distribution indicated by the depth information 620 and/or color distribution of pixels of the image 610.

Referring to FIG. 6, the electronic device identifying the object 630 may generate or obtain a background area 640 by inferring a content beyond the object 630. The background area 640 may be a combination of a remaining area of the image 610 different from the object 630, and a content (e.g., an inpainting area) covered by the object 630.

As described above with reference to FIGS. 3 to 5, the electronic device may determine a three-dimensional visual effect to be applied to the image 610, by using a position of the object 630 within the image 610. Referring to the position of the object 630 within the image 610 of FIG. 6, at least a partial area of the object 630 may be in contact with an edge (e.g., a bottom) of the image 610. A foreground object (e.g., a person) represented by the object 630 may not be completely included in a FoV of a camera that captured the image 610.

Referring to the depth information 620 of FIG. 6, depth values of the object 630 may be less than depth values of the background area (or the remaining area of the image). That is, the electronic device applying the three-dimensional visual effect to the image 610 and/or the depth information 620 may determine that depth inversion of the background area with respect to the object 630 has not occurred. Since a distance between the object 630 and the camera (or an image sensor) is less than a distance between the background area and the camera, a depth corresponding to the object 630 may be lower than a depth corresponding to the background area. For example, the depth value of the object 630 may be smaller than the depth value of the background area. In case that the object 630 includes at least a portion of the edge of the image 610 and no depth inversion has occurred, the processor may apply a three-dimensional visual effect for a dynamic action to the image 610 based on the operation 450 of FIG. 4.

Referring to FIG. 6, image frames 651, 652, and 653 of a video generated by applying the three-dimensional visual effect to the image 610 are illustrated. The processor may generate, display, or store the video which is set to sequentially display the image frames 651, 652, and 653 in a time domain. The processor may obtain or generate the image frames 651, 652, and 653 by moving and/or rotating the object 630, the background area 640, and a virtual camera (e.g., the virtual camera 356 of FIG. 3) within a virtual space, using information of Table 2. Referring to FIG. 6, the image frames 651, 652, and 653 sequentially displayed in a time period between t1 and t3 may be generated so that the background area 640 gradually moves in a preset direction (e.g., a left direction of a sheet on which a drawing is printed) based on the object 630.

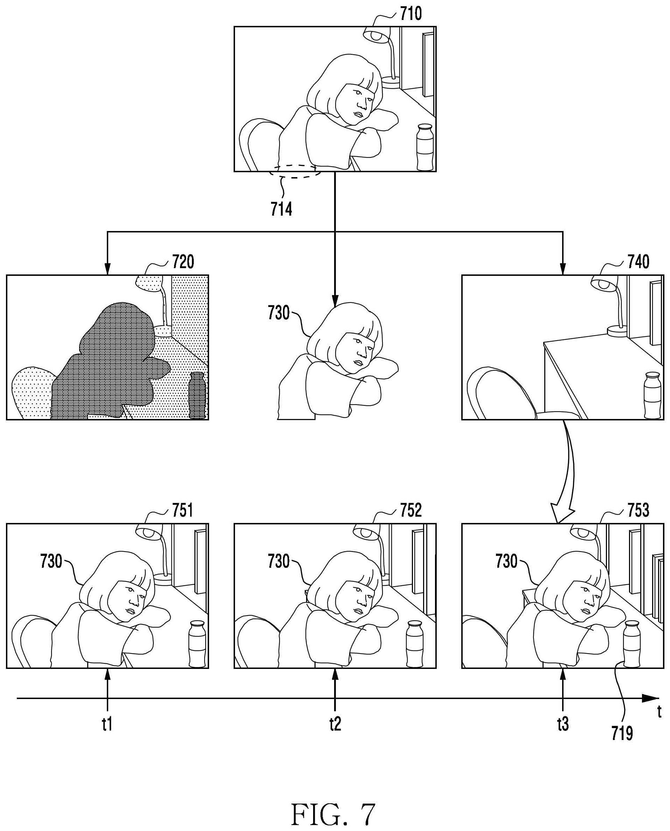

FIG. 7 illustrates an operation of an electronic device applying a three-dimensional visual effect to an exemplary image 710, according to an embodiment. The electronic device of FIG. 7 may include the electronic device 101 of FIG. 1 and/or FIG. 2. An operation performed by the electronic device of FIG. 7 may be related to at least one of the operations of FIGS. 3 to 5.

Referring to FIG. 7, the exemplary image 710 is illustrated. The electronic device may identify depth information 720 (or a depth map) of the image 710. Referring to FIG. 7, the depth information 720 may indicate two-dimensional distribution of depth values corresponding to pixels of the image 710. The two-dimensional distribution of the depth values indicated by the depth information 720 is illustrated based on density of dots in FIG. 7. For example, a portion in which relatively high-density dots are illustrated in the depth information 720 may have a smaller depth value than a portion in which relatively low-density dots are illustrated.

Referring to FIG. 7, the electronic device may obtain or identify information (e.g., segmentation information) indicating an object 730 of the image 710. The electronic device identifying the object 730 may generate or obtain a background area 740 representing the image 710 from which the object 730 has been removed. In order to generate the background area 740, the electronic device may execute a generative artificial intelligence model, or may communicate with a server configured to execute the generative artificial intelligence model.

As described above with reference to FIGS. 3 to 5, the electronic device may check or determine whether the object 730 is floating, using a position of the object 730 within the image 710. In an embodiment of processing the exemplary image 710 of FIG. 7, since the object 730 includes an edge 714 of the image 710, the electronic device may determine that the object 730 is not floating. In case that the object 730 is cut from the edge 714 of the image 710, or overlaps an edge 714, the electronic device may determine that the object 730 is not floating.

As described above with reference to FIGS. 3 to 5, the electronic device may detect depth inversion of the background area 740 with respect to the object 730, using the depth information 720. Referring to the exemplary depth information 720 of FIG. 7, it is assumed that a portion of a background area corresponding to another subject (e.g., a bottle) different from a subject (e.g., a person) represented through the object 730 has a depth lower than a depth of the object 730. Based on the assumption, the electronic device may detect the depth inversion. According to an embodiment, since a distance between the other object different from the object 730 included in the image and the camera is shorter than a distance between the object 730 and the camera, a depth value of the other object may be smaller than a depth value of the object 730.

As described above with reference to Table 3, the electronic device detecting the depth inversion may apply a static three-dimensional visual effect to the image 710. In case that the static three-dimensional visual effect is not applied, as another object (e.g., a bottle) positioned closer than the object 710 would move dynamically together with the background area, an unnatural animation may be generated. Referring to FIG. 7, image frames 751, 752, and 753 of a video generated by applying the three-dimensional visual effect to the image 710 are illustrated. The electronic device may generate the image frames 751, 752, and 753 so that the background area 640 moves at a relatively small distance (or slow speed) from a time domain by reducing deviation of horizontal positions of the background area 640 indicated by the information in Table 2. Referring to FIG. 7, since the background area 640 moves by the relatively small distance, the object 730 may not overlap a portion 719 representing the subject (e.g., the bottle) of the background area having a relatively close depth value in the image frames 751, 752, and 753 sequentially displayed in a time period between t1 and t3. For example, the object 730 may not cover the portion 719.

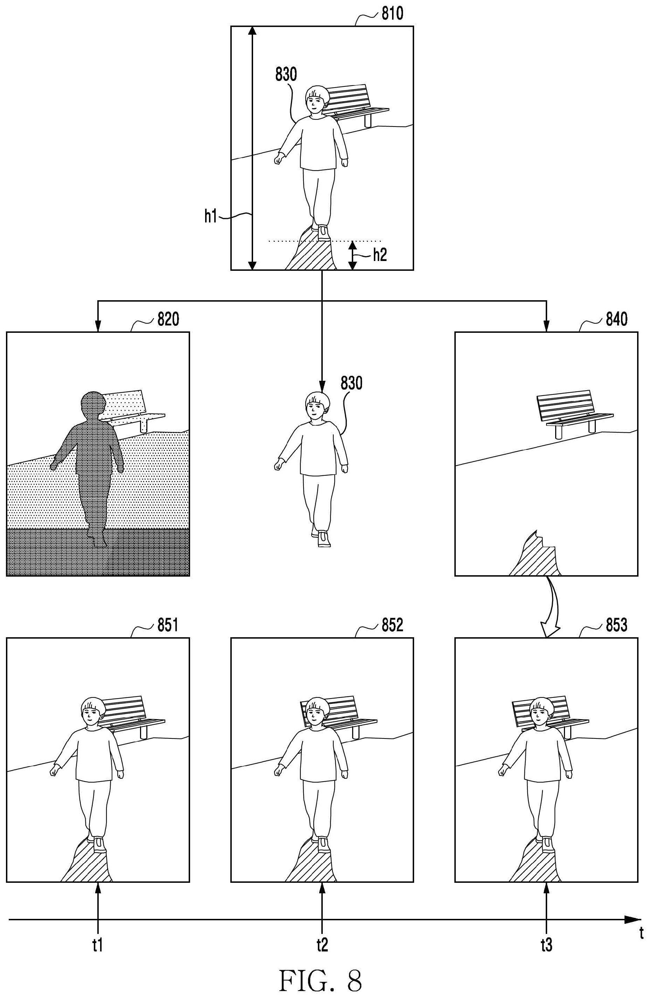

FIG. 8 illustrates an operation of an electronic device applying a three-dimensional visual effect to an exemplary image 810, according to some embodiments. The electronic device of FIG. 8 may include the electronic device 101 of FIG. 1 and/or FIG. 2. An operation performed by the electronic device of FIG. 8 may be related to at least one of the operations of FIGS. 3 to 5.

Referring to FIG. 8, the exemplary image 810 is illustrated. The electronic device may identify depth information 820 and/or an object 830 from the image 810. Similar to the above description with reference to FIGS. 6 to 7, the depth information 820 of FIG. 8 may indicate depth values corresponding to each of pixels of the image 810, based on density of dots. The electronic device may execute a generative artificial intelligence model so that the object 830 generates a background area 840 from which the object 830 is removed.

Referring to FIG. 8, the object 830 may be spaced apart from an edge of the image 810. The electronic device may determine that the object 830 floats, by using a position of the object 830 within the image 810. For example, in case that a ratio between a distance h2 between a bottom of the image 810 and the object 830, and a height h1 of the image 810 is greater than a threshold ratio (e.g., 9%), the electronic device may determine that the object 830 is floating. The electronic device may detect or identify a portion (e.g., a portion adjacent to the bottom of the image 810) of the background area 840 having a depth value less than a depth value of the object 830, by using the depth information 820. The electronic device identifying both the floating and depth inversion of the object 830 may apply a static visual effect to the image 810, based on Table 3.

Referring to FIG. 8, image frames 851, 852, and 853 of a video generated by applying the static three-dimensional visual effect to the image 810 are illustrated. The electronic device may display the image frames 851, 852, and 853 representing the background area 840 that is moved at a relatively small distance (or slow speed). Since the background area 840 moves by a relatively small distance with respect to the object 830, the object 830 may not be spaced apart from a shadow represented in the background area 840, within the image frames 851, 852, and 853 sequentially displayed in a time period between t1 and t3. For example, the electronic device may apply the static three-dimensional visual effect to the image 810 so that an unnatural motion such as the object 830 spaced apart from the shadow is not represented. For example, the electronic device may generate or display the image frames 851, 852, and 853 representing a natural motion of the object 830 and a video including the image frames 851, 852, and 853.

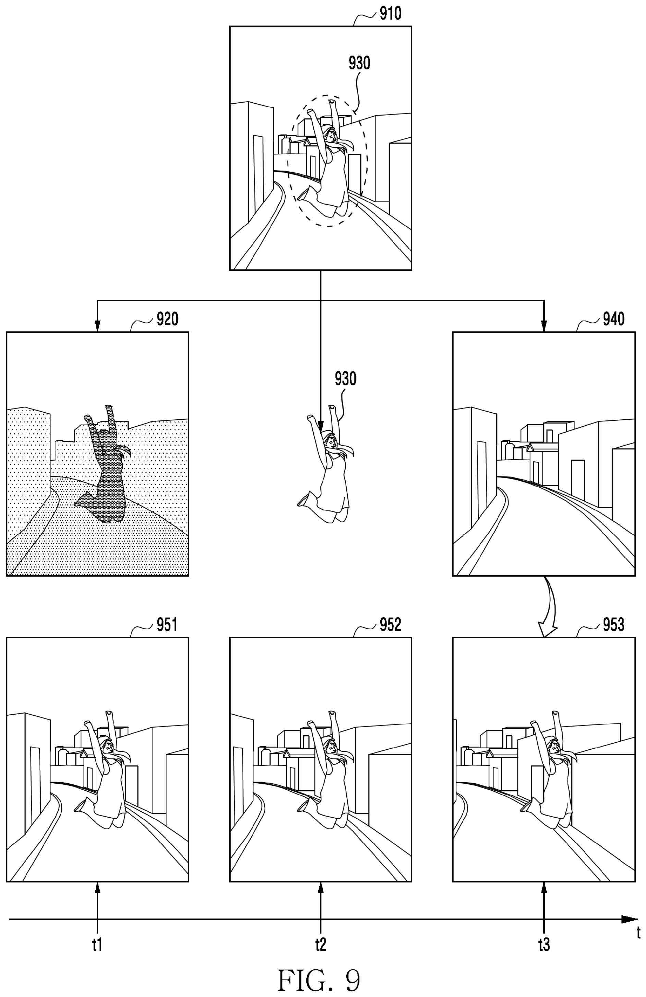

FIG. 9 illustrates an operation of an electronic device applying a three-dimensional visual effect to an exemplary image 910, according to an embodiment. The electronic device of FIG. 9 may include the electronic device 101 of FIG. 1 and/or FIG. 2. An operation performed by the electronic device of FIG. 9 may be related to at least one of the operations of FIGS. 3 to 5.

Referring to FIG. 9, the exemplary image 910 is illustrated. In response to an input to apply a three-dimensional visual effect to the image 910, the electronic device may obtain depth information 920 corresponding to the image 910. Referring to FIG. 9, distribution of depth values included in the depth information 920 is illustrated based on density of dots, similar to the above description with reference to FIGS. 6 to 8. The electronic device may identify an object 930 by performing object detection with respect to the image 910. The electronic device may generate or obtain a background area 940 representing the image 910 from which the object 930 is removed.

Referring to FIG. 9, within the image 910 capturing a jumping person, the object 930 may be spaced apart from an edge of the image 910. Since a depth value of the object 930 is less than a depth value of the background area within the image 910, depth inversion may not be detected. For example, since probability that the subject (e.g., a road between the person and a camera) closer than the person is excluded from the image 910 is increased, when capturing the jumping person, the depth inversion may not be detected.

As described above, the electronic device that detects the floating object 930 and does not detect the depth inversion may apply a three-dimensional visual effect related to a jump action to the image 910, as described above with reference to Table 3. Referring to FIG. 9, image frames 951, 952, and 953 of a video generated by applying the three-dimensional visual effect related to the jump action to the image 910 are illustrated. The electronic device may apply the three-dimensional visual effect, which is set to emphasize the jump action, to the image 910. The three-dimensional visual effect may increase moving speed and/or a moving distance of the background area 940 with respect to the object 930 than another three-dimensional visual effect (e.g., the static three-dimensional visual effect of FIG. 8 and/or the three-dimensional visual effect of FIG. 6).

As described above, according to an embodiment, the electronic device may apply the three-dimensional visual effect to be applied to the image 910 based on a position and/or the depth inversion of the object 930 in the image 910. As described above with reference to Table 3, the three-dimensional visual effect may be classified into a three-dimensional visual effect related to a dynamic action, a static three-dimensional visual effect, and a three-dimensional visual effect related to a jump action. The electronic device may change or adjust the three-dimensional visual effect to be applied to the image 910 by adjusting parameters (e.g., a horizontal position for each key frame in the background area 940) of information (e.g., the information based on the exemplary JSON of Table 2) to define a specific three-dimensional visual effect. For example, a position, a moving direction, and/or moving speed of a layer corresponding to the background area 940 may be changed or determined according to floating and/or the depth inversion of the object 930.

Hereinafter, an exemplary operation of the electronic device applying the three-dimensional visual effect to an image in which a plurality of subjects is captured will be described with reference to FIG. 10.

FIG. 10 is a flowchart of operations performed by an electronic device according to an embodiment. The electronic device of FIG. 10 may include the electronic device 101 of FIG. 1 and/or FIG. 2. Operations of FIG. 10 may be performed by the electronic device 101 and/or the processor 210 of FIG. 2. The operations of FIG. 10 may be performed based on execution of the programs (e.g., the salient object detector 241, the depth detector 242, the depth inversion detector 243, the float detector 244, the pixel unprojector 245, and/or the 3D renderer 246) illustrated in FIG. 2. The operations of FIG. 10 may be related to the operation 330 of FIG. 3.

An order in which the operations of FIG. 10 are performed may vary according to an embodiment. For example, according to an embodiment, the electronic device may perform the operations of FIG. 10 differently from an order illustrated in FIG. 10, or may perform at least two operations substantially simultaneously.

Referring to FIG. 10, in operation 1010, according to an embodiment, the processor of the electronic may identify a subject to which a three-dimensional visual effect may be applied from an image. The operation 1010 may be performed by executing the salient object detector 241. The processor may identify one or more subjects related to the image by executing a model (e.g., the artificial intelligence model trained to perform object detection described above) to detect the subject. The processor may obtain, from the model, information indicating positions of each of one or more subjects included in the image. The information may indicate bounding boxes representing the positions, respectively.

Referring to FIG. 10, in operation 1020, according to an embodiment, the processor of the electronic device may check whether a plurality of subjects have been identified from the image. In case that one subject is identified from an image (1020-No), the processor may perform operation 1040. In case that the plurality of subjects is identified from the image (1020-YES), the processor may perform operation 1030.

Referring to FIG. 10, in the operation 1040, according to an embodiment, the processor of the electronic device may determine an area within an image corresponding to a single subject as an area to which the three-dimensional visual effect is applied. In case that the processor detects one subject from the image, the processor may determine a portion of the image related to the subject as an area, which is a reference to which the three-dimensional visual effect is applied.

Referring to FIG. 10, in the operation 1030, according to an embodiment, the processor of the electronic device may determine an area within an image corresponding to one subject of a plurality of subjects as an area to which the three-dimensional visual effect is applied. The processor may determine, among the plurality of subjects, an area corresponding to the subject closest to a camera as an area at a time point when the image is captured. For example, the processor may obtain depth information corresponding to the image by executing the depth detector 242. The processor may obtain depth values of portions of the image corresponding to the plurality of subjects, respectively, by using the depth information. Among the depth values, the electronic device may determine a portion having a minimum depth value as an area to which the three-dimensional visual effect of the operation 1030 is applied. By recognizing a plurality of subjects, the electronic device may identify an object of interest of a user, and determine the identified object of interest as the object of the operation 1030. When recognizing the plurality of subjects, the electronic device may determine an area to which a three-dimensional visual effect of the operation 1030 is applied, using photos stored in the electronic device, photos uploaded to a social network service (SNS), and/or other images viewed by the user.

In an embodiment, the processor may determine an area of the operation 1030, based on types (or classes, or categories) of the plurality of subjects. For example, the electronic device may determine an area classified as a front of a human captured as the area of the operation 1030, independently of the depth value. In case that the front of the human face is not captured, the electronic device may obtain the depth values of portions of the image corresponding to the plurality of subjects, using the depth information, and among the depth values, a portion having a minimum depth value may be determined as the area of the operation 1030.

Referring to FIG. 10, in operation 1050, according to an embodiment, the processor of the electronic device may apply the three-dimensional visual effect according to a position and/or a depth within an image of an area. The processor may select or determine the three-dimensional visual effect to be applied to the image by performing the operation of FIGS. 3 to 5 with respect to an area of the operation 1050. For example, among a first three-dimensional visual effects described with reference to FIG. 6, a second three-dimensional visual effect described with reference to FIGS. 7 and/or 8, and a third three-dimensional visual effect described with reference to FIG. 9, the processor may select or determine the three-dimensional visual effect to be applied to the image, based on floating of the area of the operation 1050 and/or depth inversion detected based on the area of the operation 1050.

Hereinafter, three-dimensional visual effects that may be indicated in a format of Table 2, and conditions in which the three-dimensional visual effects are selected will be exemplarily described with reference to FIGS. 11A and/or 11B.

FIGS. 11A and 11B illustrate an exemplary operation of an electronic device determining a three-dimensional visual effect to be applied to an image, according to some embodiments. The electronic device of FIGS. 11A and/or 11B may include the electronic device 101 of FIGS. 1 and 2. Operations of FIGS. 11A and/or 11B may be performed by the programs (e.g., the salient object detector 241, the depth detector 242, the depth inversion detector 243, the float detector 244, the pixel unprojector 245, and/or the 3D renderer 246) illustrated in FIG. 2. An operation of the electronic device of FIGS. 11A and/or 11B may be related to at least one of the operations of FIGS. 3 to 5 and/or 10.

Referring to FIGS. 11A to 11B, exemplary three-dimensional visual effects applicable to an image (the image 120 of FIG. 1, the image 230 of FIG. 2, and/or the image 315 of FIG. 3), by the electronic device and exemplary conditions under which each of the three-dimensional visual effects is selected (e.g., a first condition 1110 to a seventh condition 1170) are illustrated together with exemplary images.

Referring to FIG. 11A, the electronic device that identifies an image that satisfies the first condition 1110 may apply a three-dimensional visual effect referred to as a Dolly Zoom left (L) and/or a Dolly Zoom right (R) to the image. The first condition 1110 may be that an object of the image corresponds to a face (e.g., a human face) and has a size exceeding a threshold ratio within the image in order to satisfy the first condition 1110. The electronic device may determine whether the image satisfying the first condition 1110 has been identified, by using a size of the object in the image and/or a type (or class or category) of a foreground object corresponding to the object.

The three-dimensional visual effect referred to as the Dolly Zoom left (L) and/or the Dolly Zoom right (R), corresponding to the first condition 1110 of FIG. 11A, may be set to enlarge a background area with respect to the object. Left, and right of the Dolly Zoom left (L) and/or the Dolly Zoom right (R) may indicate a moving direction of the enlarged background area. When applying the three-dimensional visual effect to an image satisfying the first condition 1110, the electronic device may determine a degree to which the background area is enlarged and/or movement speed of the background area according to floating and/or depth inversion of the object. For example, the electronic device that detects the depth inversion from the image that satisfies the first condition 1110 may reduce the degree to which the background area is enlarged and/or the movement speed of the background area, as described above with reference to FIG. 7.

Referring to FIG. 11A, the electronic device identifying an image that satisfies a second condition 1120 may apply the three-dimensional visual effect referred to as a Top left to right (L2R) and/or a Top right to left (R2L) to the image. The second condition 1120 may be that the object of the image to be positioned at a top of a center among portions of the image divided into 9 equal portions and that the object is spaced apart from a bottom of the image (e.g., floating) in order to satisfy the second condition 1120.

The three-dimensional visual effect, referred to as the Top left to right (L2R) and/or the Top right to left (R2L), corresponding to the second condition 1120 of FIG. 11A, may be set so that the background area moves in a horizontal direction (e.g., left to right (L2R), and/or right to left (R2L)) with respect to the object. The three-dimensional visual effect may be set to rotate (e.g., a change in a direction of a virtual camera, set by the "camera_dir_x" variable in Table 2) the virtual camera adjacent to the top. When the three-dimensional visual effect is applied to the image satisfying the second condition 1120, the electronic device may determine a degree and/or speed to which the background area is moved according to the depth inversion. For example, the electronic device that detects the depth inversion from the image that satisfies the second condition 1120 may reduce moving speed and/or a moving distance of the background area.

Referring to FIG. 11A, the electronic device identifying an image that satisfies a third condition 1130 may apply a three-dimensional visual effect referred to as a slide to the image. The third condition 1120 may be that the object of the image is positioned at a upper left or a upper right of the portions of the image divided into 9 equal portions, and that the object is separated from the bottom of the image in order to satisfy the third condition 1130.

The three-dimensional visual effect referred to as the slide, corresponding to the third condition 1130 of FIG. 11A, may be set to move the background area less than the three-dimensional visual effect referred to as the Top left to right (L2R) and/or the Top right to left (R2L). For example, deviation between key-frames of a horizontal position (e.g., "layer_position[0].x") of the background area of Table 2 may be less than deviation between key-frames of a horizontal position of the background area, which is included in information to define the three-dimensional visual effect, referred to as the Top left to right (L2R) and/or the Top right to left (R2L).

Referring to FIG. 11A, the electronic device identifying an image that satisfies a fourth condition 1140 may apply a three-dimensional visual effect referred to as a top-left to top-right (TL2TR) and/or a top-right to top-left (TR2TL) to the image. The fourth condition 1140 may be that the object of the image to be positioned at a upper left or a upper right of the portions of the image divided into 9 equal portions in order to satisfy the fourth condition 1140.

The three-dimensional visual effect, referred to as the TL2TR and/or the TR2TL, corresponding to the fourth condition 1140 of FIG. 11A, may be set so that the background area moves in a horizontal direction (e.g., the top-left to top-right (TL2TR) and/or the top-right to top-left (TR2TL)) with respect to the object. The three-dimensional visual effect referred to as the TL2TR and/or the TR2TL may be set to move the background area less than the three-dimensional visual effect referred to as Top L2R and/or Top R2L.

Referring to FIG. 11A, the electronic device identifying an image that satisfies a fifth condition 1130 may apply a three-dimensional visual effect referred to as a left to right (L2R) and/or a right to left (R2L) to the image. The fifth condition 1150 may be that the object of the image is positioned in a center portion and a bottom portion of the center portion of the image divided into 9 equal portions and that the object corresponds to an upper body of a person (e.g., torso) in order to satisfy the fifth condition 1150.

The three-dimensional visual effect referred to as the L2R and/or the R2L, corresponding to the fifth condition 1150 of FIG. 11A, may be set so that the background area moves in a horizontal direction (e.g., from left to right and/or from right to left) with respect to a foreground direction. The three-dimensional visual effect referred to as the L2R and/or the R2L may be set to move the background area less than the three-dimensional visual effect referred to as the Top L2R and/or the Top R2L.

Referring to FIG. 11B, the electronic device identifying an image that satisfies a sixth condition 1160 may apply a three-dimensional visual effect referred to as a bottom-left to top-right (BL2TR) and/or a bottom-right to top-left (BR2TL) to the image. The sixth condition 1160 may be that the object of the image is positioned in the center portion and the bottom portion of the center among portions of the image divided into 9 equal portions and that the object does not correspond to the upper body of the person (e.g., correspond to a whole body of the person) in order to satisfy the sixth condition 1160.

The three-dimensional visual effect, referred to as the BL2TR and/or the BR2TL, corresponding to the sixth condition 1160 of FIG. 11B, may be set so that the background area moves in a diagonal direction (e.g., from a bottom-left to a top-right and/or from a bottom-right to a top-left) with respect to the foreground direction. The three-dimensional visual effect referred to as the BL2TR and/or the BR2TL may be set to move the background area less than the three-dimensional visual effect referred to as the Top L2R and/or the Top R2L.

Referring to FIG. 11B, the electronic device identifying an image that satisfies the seventh condition 1170 may apply a three-dimensional visual effect referred to as a top-left to bottom-right (TL2BR) and/or a top-right to bottom-left (TR2BL) to an image. The seventh condition 1170 may be that the object of the image is positioned in a left central portion, a left bottom portion, a right central portion, and/or a right bottom portion among the portions of the image divided into 9 equal portions in order to satisfy the seventh condition 1170.

Referring to FIG. 11B, the three-dimensional visual effect, referred to as the TL2BR and/or the TR2BL, corresponding to the seventh condition 1170, may be set so that the background area moves in a diagonal direction (e.g., from a top-left to a bottom-right and/or from a top-right to a bottom-left) with respect to the foreground direction. The three-dimensional visual effect referred to as the TL2BR and/or the TR2BL may be set to move the background area less than the three-dimensional visual effect referred to as the Top L2R and/or the Top R2L.

Although exemplary mapping of seven conditions and the three-dimensional visual effects has been described with reference to FIGS. 11A and 11B, embodiments are not limited thereto, and mapping of conditions and three-dimensional visual effects may be implemented differently according to the electronic device. When any one condition of the conditions is satisfied, the electronic device may change moving speed and/or a moving distance of the background area according to floating and/or depth inversion of the object. For example, when detecting the depth inversion, the electronic device may reduce the moving speed and/or the moving distance of the background area.

In an embodiment in which the electronic device corresponds to a HMD (e.g., the HMD device 293 of FIG. 2), a degree (e.g., the moving distance and/or the moving speed) to which the electronic device moves the background area to apply the three-dimensional visual effect may be less than the degree to which the electronic device other than the HMD moves the background area to apply the three-dimensional visual effect. For example, in a three-dimensional execution environment with binocular parallax, the electronic device, which may be an HMD, may apply relatively less three-dimensional visual effect.

FIG. 12 illustrates a user interface (UI) displayed by an electronic device to adjust a three-dimensional visual effect, according to an embodiment. Referring to FIG. 12, the exemplary state of the electronic device of FIG. 1 is illustrated. An exemplary state of FIG. 12 may be related to the state 192 of FIG. 1.

Referring to FIG. 12, an exemplary state of the electronic device 101 displaying a first video 150 is illustrated as a result of application a three-dimensional visual effect to an image (e.g., the image 120 of FIG. 1). The electronic device 101 may receive an input to apply the three-dimensional visual effect to an image including an object and a background area. Based on the input, the electronic device 101 may determine any one of a plurality of three-dimensional visual effects, by using a position of the object within the image, a depth of the object, and a depth of the background area. The plurality of three-dimensional visual effects may be preset. The object and the background area may be identified using segmentation information obtained from the image, using a model trained to perform object detection. The depth of the object and the depth of the background area may be identified by using depth information obtained from the image, using a model trained to determine depth values of pixels included in the image.

In an embodiment, the electronic device 101 may generate a video (e.g., the first video 150 of FIG. 12) corresponding to the image by applying the determined three-dimensional visual effect to the image. For example, according to whether the position of the object is spaced apart from an edge of the image, the electronic device may determine any one of the plurality of three-dimensional visual effects. For example, according to whether a depth of at least a portion of the background area is lower than the depth of the object, the electronic device may determine any one of the plurality of three-dimensional visual effects.

Referring to FIG. 12, an exemplary screen including the first video 150 indicating a result to which the three-dimensional visual effect is applied to the image is illustrated. The electronic device 101 may display, together with the first video 150, visual objects to adjust an attribute (e.g., a movement direction, a movement distance, and/or movement speed of the background area) of the three-dimensional visual effect applied to the first video 150 on a display 110. For example, the electronic device 101 may display visual objects 1210 to adjust a movement direction of the background area, the object, and/or a virtual camera. Arrows included in each of the visual objects 1210 may indicate distinct moving directions. Based on an input to select any one of the visual objects 1210, the electronic device may set the moving direction of the background area, the object, and/or the virtual camera as a direction of the arrow of the visual object corresponding to the input.

Referring to FIG. 12, the electronic device 101 may display a visual object 1220 on the display 110, to adjust a distance by which the background area, the object, and/or the virtual camera moves within a virtual space. The visual object 1220 may be set to be movable on a straight line indicating a selectable range, referred to as a slider. Based on an input to move the visual object 1220, the electronic device may set the moving distance of the background area, the object, and/or the virtual camera as a distance corresponding to the input.

Referring to FIG. 12, the electronic device 101 may display a visual object 1230 on the display 110 to adjust moving speed of the background area, the object, and/or of the virtual camera. The visual object 1230 may be an indicator on the slider. The electronic device which received an input related to the visual object 1230 may set or adjust the moving speed of the background area, the object, and/or the moving speed of the virtual camera as speed corresponding to the input.

Referring to FIG. 12, the electronic device 101 may display visual objects 1240 and 1250 to share and/or store the first video 150 on the display 110. The electronic device 101 which received an input related to the visual object 1240 may display a menu to transmit the first video 150 to an external electronic device such as a messenger, an email, and/or a television (TV). The electronic device 101 which received an input related to the visual object 1250 may store the first video 150 in memory (e.g., the memory 220 of FIG. 2) of the electronic device 101. However, embodiments are not limited thereto, and the electronic device 101 may further display a visual object (e.g., a button including a text such as "save as wallpaper") to set the first video 150 as a background screen and/or a lock screen of the electronic device 101.

FIG. 13 illustrates an exemplary operation of an electronic device generating depth information 720 from an image 710, according to an embodiment. The electronic device of FIG. 13 may include the electronic device 101 of FIG. 1 and/or FIG. 2. An operation of FIG. 13 may be performed based on execution of the programs (e.g., the salient object detector 241, the depth detector 242, the depth inversion detector 243, the float detector 244, the pixel unprojector 245, and/or the 3D renderer 246) illustrated in FIG. 2. The operation of FIG. 13 may be related to an operation (e.g., the operation 320 of FIG. 3) of the electronic device to obtain the depth information.

Referring to FIG. 13, the electronic device may obtain the depth information 720, by using feature points (or key points) of the image 710, which is referred to as a landmark. The feature points on the image 710 displayed by X may be identified or determined within the image 710, based on an algorithm to search for a feature point. By analyzing the feature points, the electronic device may obtain the depth information 720 corresponding to the image 710.

According to an embodiment, the electronic device may generate or obtain the depth information 720, by using a mesh model 1310 indicating a three-dimensional form of a subject. For example, the electronic device may obtain the mesh model 1310 with a human posture represented by the image 710, by changing a form and/or a posture of the mesh model 1310 (or a 3D model) with a basic human form according to the human posture represented by the image 710. The electronic device may generate or obtain the depth information 720 (e.g., depth information in which a depth for each human body part is represented in detail) by using the mesh model 1310.

Although an embodiment to apply the three-dimensional visual effect to the image 710 has been described, embodiments are not limited thereto. The electronic device may perform a similar operation for an application that performs a three-dimensional reconstruction with respect to the image 710 based on two-dimensional color distribution, such as Neural Radiance Fields (NeRF) and/or 3D Gaussian Splatting.

As described above, when applying the three-dimensional visual effect to the image, according to an embodiment, the electronic device may select or determine the three-dimensional visual effect to be applied to the image by using a positional relationship and/or a depth relationship of an object of the image. For example, a position, a movement distance, and a movement direction of the object, a background area, and a virtual camera, may be determined according to the positional relationship and/or the depth relationship.

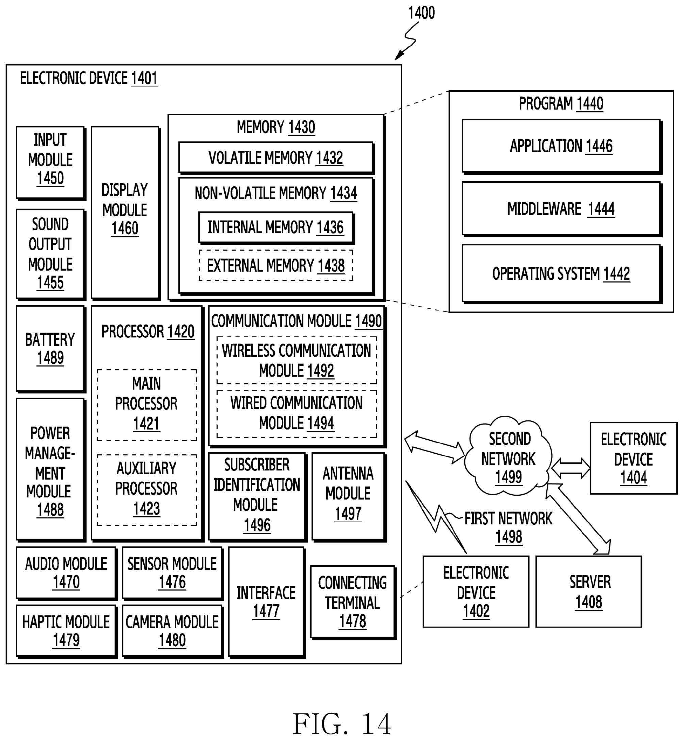

FIG. 14 is a block diagram illustrating an electronic device 1401 in a network environment 1400 according to various embodiments. Referring to FIG. 14, the electronic device 1401 in the network environment 1400 may communicate with an electronic device 1402 via a first network 1498 (e.g., a short-range wireless communication network), or at least one of an electronic device 1404 or a server 1408 via a second network 1499 (e.g., a long-range wireless communication network). According to an embodiment, the electronic device 1401 may communicate with the electronic device 1404 via the server 1408. According to an embodiment, the electronic device 1401 may include a processor 1420, memory 1430, an input module 1450, a sound output module 1455, a display module 1460, an audio module 1470, a sensor module 1476, an interface 1477, a connecting terminal 1478, a haptic module 1479, a camera module 1480, a power management module 1488, a battery 1489, a communication module 1490, a subscriber identification module(SIM) 1496, or an antenna module 1497. In some embodiments, at least one of the components (e.g., the connecting terminal 1478) may be omitted from the electronic device 1401, or one or more other components may be added in the electronic device 1401. In some embodiments, some of the components (e.g., the sensor module 1476, the camera module 1480, or the antenna module 1497) may be implemented as a single component (e.g., the display module 1460).

The processor 1420 may execute, for example, software (e.g., a program 1440) to control at least one other component (e.g., a hardware or software component) of the electronic device 1401 coupled with the processor 1420, and may perform various data processing or computation. According to an embodiment, as at least part of the data processing or computation, the processor 1420 may store a command or data received from another component (e.g., the sensor module 1476 or the communication module 1490) in volatile memory 1432, process the command or the data stored in the volatile memory 1432, and store resulting data in non-volatile memory 1434. According to an embodiment, the processor 1420 may include a main processor 1421 (e.g., a central processing unit (CPU) or an application processor (AP)), or an auxiliary processor 1423 (e.g., a graphics processing unit (GPU), a neural processing unit (NPU), an image signal processor (ISP), a sensor hub processor, or a communication processor (CP)) that is operable independently from, or in conjunction with, the main processor 1421. For example, when the electronic device 1401 includes the main processor 1421 and the auxiliary processor 1423, the auxiliary processor 1423 may be adapted to consume less power than the main processor 1421, or to be specific to a specified function. The auxiliary processor 1423 may be implemented as separate from, or as part of the main processor 1421.

The auxiliary processor 1423 may control at least some of functions or states related to at least one component (e.g., the display module 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). According to an embodiment, the auxiliary processor 1423 (e.g., an image signal processor or a communication processor) may be implemented as part of another component (e.g., the camera module 1480 or the communication module 1490) functionally related to the auxiliary processor 1423. According to an embodiment, the auxiliary processor 1423 (e.g., the neural processing unit) may include a hardware structure specified for artificial intelligence model processing. An artificial intelligence model may be generated by machine learning. Such learning may be performed, e.g., by the electronic device 1401 where the artificial intelligence is performed or via a separate server (e.g., the server 1408). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434.

The program 1440 may be stored in the memory 1430 as software, and may include, for example, an operating system (OS) 1442, middleware 1444, or an application 1446.

The input module 1450 may receive a command or data to be used by another component (e.g., the processor 1420) of the electronic device 1401, from the outside (e.g., a user) of the electronic device 1401. The input module 1450 may include, for example, a microphone, a mouse, a keyboard, a key (e.g., a button), or a digital pen (e.g., a stylus pen).

The sound output module 1455 may output sound signals to the outside of the electronic device 1401. The sound output module 1455 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1460 may visually provide information to the outside (e.g., a user) of the electronic device 1401. The display module 1460 may include, for example, a display, a hologram device, or a projector and control circuitry to control a corresponding one of the display, hologram device, and projector. According to an embodiment, the display module 1460 may include a touch sensor adapted to detect a touch, or a pressure sensor adapted to measure the intensity of force incurred by the touch.

The audio module 1470 may convert a sound into an electrical signal and vice versa. According to an embodiment, the audio module 1470 may obtain the sound via the input module 1450, or output the sound via the sound output module 1455 or a headphone of an external electronic device (e.g., an electronic device 1402) directly (e.g., wiredly) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. According to an embodiment, the sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device (e.g., the electronic device 1402) directly (e.g., wiredly) or wirelessly. According to an embodiment, the interface 1477 may include, for example, a high definition multimedia interface (HDMI), a universal serial bus (USB) interface, a secure digital (SD) card interface, or an audio interface.

A connecting terminal 1478 may include a connector via which the electronic device 1401 may be physically connected with the external electronic device (e.g., the electronic device 1402). According to an embodiment, the connecting terminal 1478 may include, for example, an HDMI connector, a USB connector, a SD card connector, or an audio connector (e.g., a headphone connector).

The haptic module 1479 may convert an electrical signal into a mechanical stimulus (e.g., a vibration or a movement) or electrical stimulus which may be recognized by a user via his tactile sensation or kinesthetic sensation. According to an embodiment, the haptic module 1479 may include, for example, a motor, a piezoelectric element, or an electric stimulator.

The camera module 1480 may capture a still image or moving images. According to an embodiment, the camera module 1480 may include one or more lenses, image sensors, image signal processors, or flashes.

The power management module 1488 may manage power supplied to the electronic device 1401. According to an embodiment, the power management module 1488 may be implemented as at least part of, for example, a power management integrated circuit (PMIC).

The battery 1489 may supply power to at least one component of the electronic device 1401. According to an embodiment, the battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the application processor (AP)) and supports a direct (e.g., wired) communication or a wireless communication. According to an embodiment, the communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as Bluetooth^{™}, wireless-fidelity (Wi-Fi) direct, or infrared data association (IrDA)) or the second network 1499 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The wireless communication module 1492 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1492 may support a high-frequency band (e.g., the mmWave band) to achieve, e.g., a high data transmission rate. The wireless communication module 1492 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1492 may support various requirements specified in the electronic device 1401, an external electronic device (e.g., the electronic device 1404), or a network system (e.g., the second network 1499). According to an embodiment, the wireless communication module 1492 may support a peak data rate (e.g., 20Gbps or more) for implementing eMBB, loss coverage (e.g., 1464dB or less) for implementing mMTC, or U-plane latency (e.g., 0.5ms or less for each of downlink (DL) and uplink (UL), or a round trip of 14ms or less) for implementing URLLC.

The antenna module 1497 may transmit or receive a signal or power to or from the outside (e.g., the external electronic device) of the electronic device 1401. According to an embodiment, the antenna module 1497 may include an antenna including a radiating element composed of a conductive material or a conductive pattern formed in or on a substrate (e.g., a printed circuit board (PCB)). According to an embodiment, the antenna module 1497 may include a plurality of antennas (e.g., array antennas). In such a case, at least one antenna appropriate for a communication scheme used in the communication network, such as the first network 1498 or the second network 1499, may be selected, for example, by the communication module 1490 (e.g., the wireless communication module 1492) from the plurality of antennas. The signal or the power may then be transmitted or received between the communication module 1490 and the external electronic device via the selected at least one antenna. According to an embodiment, another component (e.g., a radio frequency integrated circuit (RFIC)) other than the radiating element may be additionally formed as part of the antenna module 1497.

According to various embodiments, the antenna module 1497 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1401 and the external electronic device 1404 via the server 1408 coupled with the second network 1499. Each of the electronic devices 1402 or 1404 may be a device of a same type as, or a different type, from the electronic device 1401. According to an embodiment, all or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1401. The electronic device 1401 may provide the outcome, with or without further processing of the outcome, as at least part of a reply to the request. To that end, a cloud computing, distributed computing, mobile edge computing (MEC), or client-server computing technology may be used, for example. The electronic device 1401 may provide ultra low-latency services using, e.g., distributed computing or mobile edge computing. In another embodiment, the external electronic device 1404 may include an internet-of-things (IoT) device. The server 1408 may be an intelligent server using machine learning and/or a neural network. According to an embodiment, the external electronic device 1404 or the server 1408 may be included in the second network 1499. The electronic device 1401 may be applied to intelligent services (e.g., smart home, smart city, smart car, or healthcare) based on 5G communication technology or IoT-related technology.

In an embodiment, a method applying a three-dimensional visual effect to an image may be used. In an embodiment, according to a content (e.g., a foreground object and/or a background object) of the image, a method determining or adjusting intensity to which the three-dimensional visual effect is applied may be required. As described above, according to an embodiment, an electronic device may comprise a display, memory comprising one or more storage mediums and storing instructions, and at least one processor comprising processing circuitry. The instructions, when executed by the at least one processor individually or collectively, may cause the electronic device to display an image on the display. The instructions, when executed by the at least one processor individually or collectively, may cause the electronic device to, based on displaying the image on the display, receive an input to apply a three-dimensional visual effect to the image. The instructions, when executed by the at least one processor individually or collectively, may cause the electronic device to, based on the input, identify segmentation information indicating an object of the image. The instructions, when executed by the at least one processor individually or collectively, may cause the electronic device to, based on identifying the object including an edge of the image from the segmentation information, generate, as a result of application of the three-dimensional visual effect, on the display, a first video representing a background area within the image moved by a first distance beyond the object. The instructions, when executed by the at least one processor individually or collectively, may cause the electronic device to, based on identifying the object spaced apart from the edge of the image from the segmentation information, generate, as a result of application of the three-dimensional visual effect, on the display, a second video representing the background area within the image moved by a second distance that is shorter than the first distance beyond the object. According to an embodiment, the electronic device may apply the three-dimensional visual effect to the image. According to an embodiment, the electronic device may determine or adjust the intensity to which a three-dimensional visual effect is applied according to the content (e.g., the object and/or the background area) of the image.

For example, the instructions, when executed by the at least one processor individually or collectively, may cause the electronic device to obtain an inpainting area replacing the object by performing inpainting with respect to the object. The instructions, when executed by the at least one processor individually or collectively, may cause the electronic device to obtain the background area including the inpainting area, and a remaining area of the image different from the object.

For example, the instructions, when executed by the at least one processor individually or collectively, may cause the electronic device to identify depth information corresponding to the image. The instructions, when executed by the at least one processor individually or collectively, may cause the electronic device to, based on identifying, from the depth information, at least a portion of the background area having a depth smaller than a depth between the object and a camera capturing the image, generate the second video among the first video or the second video.

For example, the instructions, when executed by the at least one processor individually or collectively, may cause the electronic device to, based on identifying, from the depth information, the object having a depth smaller than a depth of the background area, generate the first video using the segmentation information.

For example, the instructions, when executed by the at least one processor individually or collectively, may cause the electronic device to identify the depth information indicated by sensor data of a time-of-flight (ToF) sensor, or a light detection and ranging (LiDAR) sensor that is obtained together with the image.

For example, the instructions, when executed by the at least one processor individually or collectively, may cause the electronic device to identify the depth information corresponding to the image using a model trained to output depth values respectively corresponding to pixels of the image.

For example, the instructions, when executed by the at least one processor individually or collectively, may cause the electronic device to identify information indicating distinct three-dimensional visual effects the information. The information, which is defined with respect to key frames of a video which is a result of application of the three-dimensional visual effect, may include a horizontal position of a first layer corresponding to the background area, a horizontal position of a second layer corresponding to the object, and a horizontal position of a virtual camera that is moved, to render the first video or the second video, within a virtual space including the first layer and the second layer.

For example, the instructions, when executed by the at least one processor individually or collectively, may cause the electronic device to, based on identifying the object spaced apart from the edge of the image, change the horizontal position of the first layer indicated by the information such that a deviation of horizontal positions of the first layer across the key frames is decreased. The instructions, when executed by the at least one processor individually or collectively, may cause the electronic device to generate a virtual space including the virtual camera, the second layer and the first layer which are sequentially positioned from the virtual camera. The instructions, when executed by the at least one processor individually or collectively, may cause the electronic device to generate the second video by moving, within the virtual space, the virtual camera, the second layer, and the first layer according to the information.

For example, the instructions, when executed by the at least one processor individually or collectively, may cause the electronic device to obtain the segmentation information corresponding to the image using a model for object detection.

For example, the instructions, when executed by the at least one processor individually or collectively, may cause the electronic device to display, on the display, a visual object indicating to store the result, together with the result to which the three-dimensional visual effect is applied including the first video or the second video. The instructions, when executed by the at least one processor individually or collectively, may cause the electronic device to, based on receiving an input with respect to the visual object, store the first video or the second video that is displayed on the display as the result.

As described above, in an embodiment, a method of an electronic device including a display may be provided. The method may comprise displaying an image on the display. The method may comprise, based on displaying the image on the display, receiving an input to apply a three-dimensional visual effect to the image. The method may comprise, based on the input, identifying segmentation information indicating an object of the image. The method may comprise, based on identifying the object including an edge of the image from the segmentation information, generating, as a result of application of the three-dimensional visual effect, on the display, a first video representing a background area within the image moved by a first distance beyond the object. The method may comprise, based on identifying the object spaced apart from the edge of the image from the segmentation information, generating, as a result of application of the three-dimensional visual effect, on the display, a second video representing the background area within the image moved by a second distance that is shorter than the first distance beyond the object.

For example, the method may comprise obtaining an inpainting area replacing the object by performing inpainting with respect to the object. The method may comprise obtaining the background area including the inpainting area, and a remaining area of the image different from the object.

For example, the method may comprise identifying depth information corresponding to the image. The generating the second video may comprise, based on identifying, from the depth information, at least a portion of the background area having a depth lower than a depth between the object and a camera capturing the image, generating the second video among the first video or the second video.

For example, the generating the first video may comprise, based on identifying, from the depth information, the object having a depth lower than a depth of the background area, generating the first video using the segmentation information.

For example, the identifying the depth information may comprise identifying the depth information indicated by sensor data of a time-of-flight (ToF) sensor, or a light detection and ranging (LiDAR) sensor that is obtained together with the image.

For example, the identifying the depth information may comprise identifying the depth information corresponding to the image using a model trained to output depth values respectively corresponding to pixels of the image.

For example, the method may comprise identifying information indicating distinct three-dimensional visual effects. The information, which is defined with respect to key frames of a video which is a result of application of the three-dimensional visual effect, may include a horizontal position of a first layer corresponding to the background area, a horizontal position of a second layer corresponding to the object, a horizontal position of a virtual camera that is moved, to render the first video or the second video, within a virtual space including the first layer and the second layer.

For example, the method may comprise, based on identifying the object spaced apart from the edge of the image, changing the horizontal position of the first layer indicated by the information such that a deviation of horizontal positions of the first layer across the key frames is decreased. The method may comprise generating a virtual space including the virtual camera, the second layer and the first layer which are sequentially positioned from the virtual camera. The method may comprise generating the second video by moving, within the virtual space, the virtual camera, the second layer, and the first layer according to the information.

For example, the identifying may comprise obtaining the segmentation information corresponding to the image using a model for object detection.

For example, the generating the second video may comprise displaying, on the display, a visual object indicating to store the result, together with the result to which the three-dimensional visual effect is applied including the first video or the second video. The method may comprise, based on receiving an input with respect to the visual object, storing the first video or the second video that is displayed on the display as the result.

As described above, in an embodiment, a non-transitory computer readable storage medium storing instructions may be provided. The instructions, when executed by the electronic device including a display, may cause the electronic device to receive an input to apply a three-dimensional visual effect to an image including an object and a background area. The instructions, when executed by the electronic device, may cause the electronic device to, based on the input, determine a three-dimensional visual effect of a plurality of preset three-dimensional visual effects using a position of the object within the image, a depth of the object, and a depth of the background area. The instructions, when executed by the electronic device, may cause the electronic device to generate a video corresponding to the image by applying the determined three-dimensional visual effect to the image. The instructions, when executed by the electronic device, may cause the electronic device to display the generated video on the display.

For example, the instructions, when executed by the electronic device, the electronic device, may cause the electronic device to identify the object and the background area using segmentation information obtained from the image using a model trained to perform object detection.

For example, the instructions, when executed by the electronic device, the electronic device, may cause the electronic device to identify the depth of the object and the depth of the background area using depth information obtained from the image using a model trained to determine depth values of pixels.

For example, the instructions, when executed by the electronic device, the electronic device, may cause the electronic device to determine one of the plurality of preset three-dimensional visual effects according to whether the position of the object is spaced apart from an edge of the image.

For example, the instructions, when executed by the electronic device, the electronic device, may cause the electronic device to determine one of the plurality of preset three-dimensional visual effects according to whether a depth of at least a portion of the background area is lower than the depth of the object.

As described above, according to an embodiment, an electronic device may comprise a display, memory storing instructions, comprising one or more storage mediums, at least one processor comprising processing circuitry. The instructions, when executed by the at least one processor individually or collectively, may cause the electronic device to receive an input to apply a three-dimensional visual effect to an image including an object and a background area. The instructions, when executed by the at least one processor individually or collectively, may cause the electronic device to, based on the input, determine a three-dimensional visual effect of a plurality of preset three-dimensional visual effects using a position of the object within the image, a depth of the object, and a depth of the background area. The instructions, when executed by the at least one processor individually or collectively, may cause the electronic device to generate a video corresponding to the image by applying the determined three-dimensional visual effect to the image. The instructions, when executed by the at least one processor individually or collectively, may cause the electronic device to display the generated video on the display.

For example, the instructions, when executed by the at least one processor individually or collectively, may cause the electronic device to identify the object and the background area using segmentation information obtained from the image using a model trained to perform object detection.

For example, the instructions, when executed by the at least one processor individually or collectively, may cause the electronic device to identify the depth of the object and the depth of the background area using depth information obtained from the image using a model trained to determine depth values of pixels.

For example, the instructions, when executed by the at least one processor individually or collectively, may cause the electronic device to determine one of the plurality of preset three-dimensional visual effects according to whether the position of the object is spaced apart from an edge of the image.

For example, the instructions, when executed by the at least one processor individually or collectively, may cause the electronic device to determine one of the plurality of preset three-dimensional visual effects according to whether a depth of at least a portion of the background area is lower than the depth of the object.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device comprising:
a display;
memory comprising one or more storage media storing instructions; and
at least one processor comprising processing circuitry,
wherein the instructions, when executed by the at least one processor individually or collectively, cause the electronic device to:
display an image on the display;
based on displaying the image, receive an input to apply a three-dimensional visual effect to the image;
based on the input, identify segmentation information indicating an object of the image;
identify the object from the segmentation information;
based on the object including an edge of the image:
apply the three-dimensional visual effect by generating, on the display, a first video representing a background area within the image moved by a first distance beyond the object; and
based on the object being spaced apart from the edge of the image:
apply the three-dimensional visual effect by generating, on the display, a second video representing the background area within the image moved by a second distance beyond the object, the second distance being shorter than the first distance.

2. The electronic device of claim 1, wherein the instructions, when executed by the at least one processor individually or collectively, cause the electronic device to:
obtain an inpainting area that replaces the object by performing inpainting with respect to the object; and
obtain the background area including the inpainting area, and a remaining area of the image different from the object.

3. The electronic device of claim 1, wherein the instructions, when executed by the at least one processor individually or collectively, cause the electronic device to:
identify depth information corresponding to the image;
wherein generating the second video comprises:
based on identifying, from the depth information, at least a portion of the background area having a depth lower than a depth between the object and a camera capturing the image, generating the second video among the first video or the second video.

4. The electronic device of claim 3, wherein the instructions, when executed by the at least one processor individually or collectively, cause the electronic device to:
based on identifying, from the depth information, the object having a depth lower than a depth of the background area, generate the first video using the segmentation information.

5. The electronic device of claim 3, wherein the instructions, when executed by the at least one processor individually or collectively, cause the electronic device to:
identify the depth information indicated by sensor data of a time-of-flight (ToF) sensor, or a light detection and ranging (LiDAR) sensor that is obtained together with the image.

6. The electronic device of claim 3, wherein the instructions, when executed by the at least one processor individually or collectively, cause the electronic device to:
identify the depth information corresponding to the image using a model trained to output depth values respectively corresponding to pixels of the image.

7. The electronic device of claim 1, wherein the instructions, when executed by the at least one processor individually or collectively, cause the electronic device to:
identify information indicating distinct three-dimensional visual effects, the information being defined with respect to key frames of a video which is a result of applying the three-dimensional visual effect,
wherein the information include:
a horizontal position of a first layer corresponding to the background area;
a horizontal position of a second layer corresponding to the object; and
a horizontal position of a virtual camera that is moved, to render the first video or the second video, within a virtual space including the first layer and the second layer.

8. The electronic device of claim 7, wherein the instructions, when executed by the at least one processor individually or collectively, cause the electronic device to:
based on identifying the object spaced apart from the edge of the image, change the horizontal position of the first layer indicated by the information such that a deviation of horizontal positions of the first layer across the key frames is decreased;
generate a virtual space including the virtual camera, the second layer and the first layer which are sequentially positioned from the virtual camera; and
generate the second video by moving, within the virtual space, the virtual camera, the second layer, and the first layer according to the information.

9. The electronic device of claim 1, wherein the instructions, when executed by the at least one processor individually or collectively, cause the electronic device to:
obtain the segmentation information corresponding to the image by inputting the image into a model for object detection and receiving, as an output from the model, the segmentation information.

10. The electronic device of claim 1, wherein the instructions, when executed by the at least one processor individually or collectively, cause the electronic device to:
display, on the display, a visual object indicating to store the result, together with the result to which the three-dimensional visual effect is applied including the first video or the second video; and
based on receiving an input with respect to the visual object, store the first video or the second video that is displayed on the display as the result.

11. A method of an electronic device including a display, the method comprising:
displaying an image on the display;
based on displaying the image, receiving an input to apply a three-dimensional visual effect to the image;
based on the input, identifying segmentation information indicating an object of the image;
identifying the object from the segmentation information;
based on the object including an edge of the image:
applying the three-dimensional visual effect by generating, on the display, a first video representing a background area within the image moved by a first distance beyond the object; and
based on the object being spaced apart from the edge of the image:
applying the three-dimensional visual effect by generating, on the display, a second video representing the background area within the image moved by a second distance beyond the object, the second distance being shorter than the first distance.

12. The method of claim 11, further comprising:
obtaining an inpainting area that replaces the object by performing inpainting with respect to the object; and
obtaining the background area including the inpainting area, and a remaining area of the image different from the object.

13. The method of claim 11, further comprising:
identifying depth information corresponding to the image,
wherein generating the second video comprises:
based on identifying, from the depth information, at least a portion of the background area having a depth lower than a depth between the object and a camera capturing the image, generating the second video among the first video or the second video.

14. The method of claim 13, wherein generating the first video comprises:
based on identifying, from the depth information, the object having a depth lower than a depth of the background area, generating the first video using the segmentation information.

15. The method of claim 13, wherein the depth information is identified based on sensor data of a time-of-flight (ToF) sensor, or based on a light detection and ranging (LiDAR) sensor that is obtained together with the image.
